# EUROPEAN PATENT SPECIFICATION

(11) **EP 4 038 520 B1**
(45) Date of publication and mention of the grant of the patent: **19.11.2025**
(21) Application number: 20871565.6
(22) Date of filing: 30.09.2020
(51) Int. Cl.: G06F 21/30, H04L 9/32, H04L 67/125, G06F 21/44

(54) **METHODS AND APPARATUS TO ATTEST OBJECTS IN EDGE COMPUTING ENVIRONMENTS**
VERFAHREN UND VORRICHTUNG ZUR BESTÄTIGUNG VON OBJEKTEN IN EDGE-COMPUTING-UMGEBUNGEN
PROCÉDÉS ET APPAREIL PERMETTANT L'ATTESTATION D'OBJETS DANS DES ENVIRONNEMENTS INFORMATIQUES PÉRIPHÉRIQUES

(30) Priority: 30.09.2019 US 201962908386 P
(43) Date of publication of application: 10.08.2022
(73) Proprietor: INTEL Corporation, Santa Clara, CA 95054 (US)
(72) Inventor: SMITH, Ned M., Beaverton, Oregon 97006 (US); SABELLA, Dario, 81479 Munich (DE); DOSHI, Kshitij Arun, Tempe, Arizona 85282 (US); GUIM BERNAT, Francesc, 08036 Barcelona (ES); GADIYAR, Rajesh, Chandler, Arizona 85224 (US)
(74) Representative: Maiwald GmbH
(86) International application number: PCT/US2020/053649
(87) International publication number: WO 2021/067510

(56) References cited:
- WO-A1-2016/137307
- WO-A1-2018/026841
- JP-A- 2015 219 796
- US-A1- 2011 320 823
- US-A1- 2018 373 863
- US-A1- 2019 138 294
- US-A1- 2019 138 294
- US-A1- 2019 230 002
- US-B2- 8 850 588

## Description

### FIELD OF THE DISCLOSURE

This disclosure relates generally to computing in edge environments and, more particularly, to methods and apparatus to attest objects in edge computing environments.

### BACKGROUND

Edge environments (e.g., an Edge, Fog, multi-access edge computing (MEC), or Internet of Things (IoT) network) enable workload execution (e.g., execution of one or more computing tasks, execution of a machine learning model using input data, etc.), data storage, etc. near endpoint devices that request an execution of the workload, or components of the workload. Edge environments may include infrastructure, such as an edge platform with networking and storage capabilities, that is connected to cloud infrastructure, endpoint devices, and/or additional edge infrastructure via networks such as the Internet. Edge platforms, edge nodes or edges may be closer in proximity to endpoint devices than cloud infrastructure, such as centralized servers. US 2011/320823 A1 discloses a mobile device, in which a trusted sensing application combines signed, timestamped sensor readings into a signed set which is sent to a consuming application.

### SUMMARY

The invention provides an apparatus, a non-transitory computer-readable medium, and a method, as defined by the appended claims.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings are provided by way of example, and not limitation.
FIG. 1 illustrates an overview of an edge cloud configuration for edge computing.
FIG. 2 illustrates operational layers among endpoints, an edge cloud, and cloud computing environments.
FIG. 3 illustrates a block diagram of an example environment for networking and services in an edge computing system.
FIG. 4 illustrates deployment of a virtual edge configuration in an edge computing system operated among multiple edge nodes and multiple tenants.
FIG. 5 illustrates various compute arrangements deploying containers in an edge computing system.
FIG. 6 illustrates an example compute and communication use case involving mobile access to applications in an example edge computing system.
FIG. 7 is a block diagram of an example relationship among an example object that includes an object interface, an example TIO that includes an example TIO interface, and an example attestation information object (AIO) that includes an AIO interface.
FIG. 8 is a block diagram of an example computing architecture that may employ the TIO and AIO system of FIG. 7.
FIG. 9 is a block diagram of an example information object generator that may generate the TIO, the TIO interface, the AIO, and the AIO interface.
FIGS. 10-11 are flowcharts representative of example machine readable instructions which may be executed to implement the information object generator of FIG. 9.
FIG. 12 illustrates example roles that may be implemented by the TIO of FIG. 7.
FIG. 13 illustrates an example endpoint environment including AIO.
FIGS. 14-16 are flow diagrams illustrating the integration of attestation into several conveyance protocols.
FIG. 17 illustrates an example mobile edge system reference architecture, arranged according to an ETSI Multi-Access Edge Computing (MEC) specification.
FIG. 18 illustrates a MEC reference architecture in a Network Function Virtualization (NFV) environment, according to an example;
FIG. 19 is a logical diagram illustrating protocols utilized for attestation within a MEC environment.
FIG. 20A is a block diagram of an example implementation of an example compute node that may be deployed in one of the edge computing systems illustrated in FIGS. 1-4, 6-8.
FIG. 20B is another block diagram of an example implementation of an example compute node that may be deployed in one of the edge computing systems illustrated in FIGS. 1-4, 6-8.
FIG. 21 is a block diagram of an example processing platform structured to execute the instructions of FIGS. 10 and 11 to implement the example information object generator of FIG. 9.
FIG. 22 is a block diagram of an example software distribution platform to distribute software (e.g., software corresponding to the example computer readable instructions of FIGS. 10-11) to client devices such as consumers (e.g., for license, sale and/or use), retailers (e.g., for sale, re-sale, license, and/or sub-license), and/or original equipment manufacturers (OEMs) (e.g., for inclusion in products to be distributed to, for example, retailers and/or to direct buy customers).

Unless specifically stated otherwise, descriptors such as "first," "second," "third," etc. are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly that might, for example, otherwise share a same name. As used herein "substantially real time" refers to occurrence in a near instantaneous manner recognizing there may be real world delays for computing time, transmission, etc. Thus, unless otherwise specified, "substantially real time" refers to real time +/- 1 second.

### DETAILED DESCRIPTION

Methods and apparatus to attest objects in edge computing environments or other platforms are disclosed. Edge computing, at a general level, refers to the transition of compute and storage resources closer to endpoint devices (e.g., consumer computing devices, user equipment, etc.) in order to optimize total cost of ownership, operating expense, reduce application latency, reduce network backhaul traffic and energy, improve service capabilities, and improve compliance with data privacy or security requirements. Edge computing may, in some scenarios, provide a cloud-like distributed service that offers orchestration and management for applications among many types of storage and compute resources. As a result, some implementations of edge computing have been referred to as the "edge cloud" or the "fog," as powerful computing resources previously available only in large remote data centers are moved closer to endpoints and made available for use by consumers at the "edge" of the network.

Edge computing use cases in mobile network settings have been developed for integration with multi-access edge computing (MEC) approaches, also known as "mobile edge computing." MEC approaches are designed to allow application developers and content providers to access computing capabilities and an information technology (IT) service environment in dynamic mobile network settings at the edge of the network. Limited standards have been developed by the European Telecommunications Standards Institute (ETSI) industry specification group (ISG) in an attempt to define common interfaces for operation of MEC systems, platforms, hosts, services, and applications.

Edge computing, MEC, and related technologies attempt to provide reduced latency, increased responsiveness, reduce network backhaul traffic and energy, keep data local for improved privacy and security, and provide more available computing power and network bandwidth than offered in traditional cloud network services and wide area network connections. However, the integration of mobility and dynamically launched services to some mobile use and device processing use cases has led to limitations and concerns with orchestration, functional coordination, and resource management, especially in complex mobility settings where many participants (e.g., devices, hosts, tenants, service providers, operators, etc.) are involved.

In a similar manner, Internet of Things (IoT) networks and devices are designed to offer a distributed compute arrangement from a variety of endpoints. IoT devices can be physical or virtualized objects that may communicate on a network, and can include sensors, actuators, and other input/output components, which may be used to collect data or perform actions in a real-world environment. For example, IoT devices can include low-powered endpoint devices that are embedded or attached to everyday things, such as buildings, vehicles, packages, etc., to provide an additional level of artificial sensory perception of those things. In recent years, IoT devices have become more popular and thus applications using these devices have proliferated.

In some examples, an edge environment can include an enterprise edge in which communication with and/or communication within the enterprise edge can be facilitated via wireless and/or wired connectivity. The deployment of various Edge, Fog, MEC, and IoT networks, devices, and services have introduced a number of advanced use cases and scenarios occurring at and towards the edge of the network. However, these advanced use cases have also introduced a number of corresponding technical challenges relating to orchestration, security, processing and network resources, service availability and efficiency, among many other issues. One such challenge is in relation to Edge, Fog, MEC, and IoT networks, devices, and services executing workloads on behalf of endpoint devices.

The present techniques and configurations may be utilized in connection with many aspects of current networking systems, but are provided with reference to Edge Cloud, IoT, Multi-access Edge Computing (MEC), and other distributed computing deployments. The following systems and techniques may be implemented in, or augment, a variety of distributed, virtualized, or managed edge computing systems. These include environments in which network services are implemented or managed using multi-access edge computing (MEC), fourth generation (4G), fifth generation (5G) wireless or next generation network configurations; or in wired network configurations involving fiber, copper, and other connections. Further, aspects of processing by the respective computing components may involve computational elements which are in geographical proximity of a user equipment or other endpoint locations, such as a smartphone, vehicular communication component, IoT device, etc. Further, the presently disclosed techniques may relate to other Edge/MEC/IoT network communication standards and configurations, and other intermediate processing entities and architectures.

Edge computing is a developing paradigm where computing is performed at or closer to the "edge" of a network, typically through the use of a computing platform implemented at base stations, gateways, network routers, or other devices which are much closer to end point devices producing and consuming the data. For example, edge gateway servers may be equipped with pools of memory and storage resources to perform computation in real-time for low latency use-cases (e.g., autonomous driving or video surveillance) for connected client devices. Or as an example, base stations may be augmented with compute and acceleration resources to directly process service workloads for connected user equipment, without further communicating data via backhaul networks. Or as another example, central office network management hardware may be replaced with computing hardware that performs virtualized network functions and offers compute resources for the execution of services and consumer functions for connected devices.

Edge environments include networks and/or portions of networks that are located between a cloud environment and an endpoint environment. Edge environments enable computations of workloads at edges of a network. For example, an endpoint device may request a nearby base station to compute a workload rather than a central server in a cloud environment. Edge environments include edge platforms or edges, which include pools or clusters of memory, storage resources, and/or processing resources. These edges perform computations, such as an execution of a workload, on behalf of other edges and/or edge nodes. Edge environments facilitate connections between producers (e.g., workload executors, edges) and consumers (e.g., other edges, endpoint devices).

Because edges may be closer in proximity to endpoint devices than centralized servers in cloud environments, edges enable computations of workloads with a lower latency (e.g., response time) than cloud environments. Edges may also enable a localized execution of a workload based on geographic locations or network topographies. For example, an endpoint device may require a workload to be executed in a first geographic area, but a centralized server may be located in a second geographic area. The endpoint device can request a workload execution by an edge node located in the first geographic area to comply with corporate or regulatory restrictions. Other policies could drive the execution in the edge node (e.g., energy/power saving, network backhaul traffic reduction).

Examples of workloads to be executed in an edge environment include autonomous driving computations, video surveillance monitoring, machine learning model executions, and real time data analytics. Additional examples of workloads include delivering and/or encoding media streams, measuring advertisement impression rates, object detection in media streams, speech analytics, asset and/or inventory management, and augmented reality processing.

Edge nodes or edges enable both the execution of workloads and a return of a result of an executed workload to endpoint devices with a response time lower than the response time of a server in a cloud environment. For example, if an edge is located closer to an endpoint device on a network than a cloud server, the edge service may respond to workload execution requests from the endpoint device faster than the cloud server. An endpoint device may request an execution of a time-constrained workload from an edge service rather than a cloud server.

In addition, edge nodes enable the distribution and decentralization of workload executions. For example, an endpoint device may request a first workload execution and a second workload execution. In some examples, a cloud server may respond to both workload execution requests. With an edge environment, however, a first edge may execute the first workload execution request, and a second edge may execute the second workload execution request.

To meet the low-latency and high-bandwidth demands of endpoint devices, orchestration in edge clouds is performed on the basis of timely information about the utilization of many resources (e.g., hardware resources, software resources, virtual hardware and/or software resources, etc.), and the efficiency with which those resources are able to meet the demands placed on them. Such timely information is generally referred to as telemetry data or telemetry information.

Decentralized and distributed operations at low latency are fundamental to achieving a high degree of autonomy, efficiency, and parallelism in edge computations. Different kinds of data and metadata, including, operational metadata such as telemetry information from various sources, also arise in a distributed manner during these computations. Such data may be sourced and consumed locally, sourced from elsewhere and cached and consumed locally, or sourced locally and cached or consumed elsewhere. Accesses to these different kinds of data and metadata, as well as the use of the computational resources, all need to abide by well-defined protocols to ensure that such accesses and uses are not compromised in quality. For example, effectiveness of telemetry-informed optimization depends on the quality of the telemetry information. Malicious or accidental compromise of telemetry information quality may result in skewed or fallacious performance optimization strategies.

Knowing the quality of data or telemetry means effectively knowing, (a) information about what an object or resource is, - not subject to spoofing, (b) the operations which may be performed with that object or resource, (c) the required privilege or capability for performing a given operation. Such information needs to be obtainable without forcing all types of information into a uniform permissions methodology (such as the user-group-other read-write-execute permissions employed in a Posix file system) or a common data format.

Methods and apparatus disclosed herein facilitate the attestation of a telemetry system to provide a data quality metric that accompanies telemetry and other data sets so that a decision to use telemetry or object data can be made intelligently. Without an attestation information object, use of telemetry or other data objects is made without appropriate attention to understanding the data quality metrics. Methods and apparatus disclosed herein facilitate an understanding of the quality of data or metadata, without requiring extensive coordination (costing time, bandwidths, etc.) in edge architectures or other platforms.

An object or composition of objects comprises diverse resources which resources may be physical or virtualized. Telemetry comprising its various measurements (e.g., utilization, average delay in receiving service, rate of service, power expenditure, etc.) may be provided directly by resource implementors (hardware, software, or virtualized hardware/software) or inferred on the basis of derivable observations, traces, logs, proxy events/metrics, etc. A Telemetry Information Objects (TIO) is an example means of flexible aggregation and composition of telemetry in concert with compositions of systems and in alignment with service quality objectives, particularly for ad-hoc and decentralized orchestration. An example system for TIO that may be utilized in association with the methods and apparatus disclosed herein is described in U.S. Patent Application Publication No. 2020/0136994, entitled "Methods And Apparatus To Aggregate Telemetry Data In An Edge Environment,".

Methods and apparatus disclosed herein generate an Attestation Information Object (AIO) and its interface as a component of an object or plurality of objects integrated with a TIO such that the quality of data emitted or the reliability that control actions will be applied correctly via the object interface can be measured using the AIO. An object, component, system, device, etc. that wishes to rely on the data emitted by an object may consult the AIO before acting on the data or before applying actions on the object given its attestation profile. When trustworthy operation is established via attestation according to the disclosed methods and apparatus, it is safe for the attested telemetry data to be consumed, aggregated, and/or acted upon. For example, the telemetry data may be analyzed and determined to represent an operational state that a relying party/device may use to adjust a feedback loop, perform a compensation transaction for a risk management equation, etc. Methods and apparatus disclosed herein may facilitate direct interaction with the object to assess attestation status or may be integrated into data and telemetry interfaces such that a consumer of these interfaces also has contextual access to attestation status. For example, the generated AIO may be presented as an object-oriented sub-system.

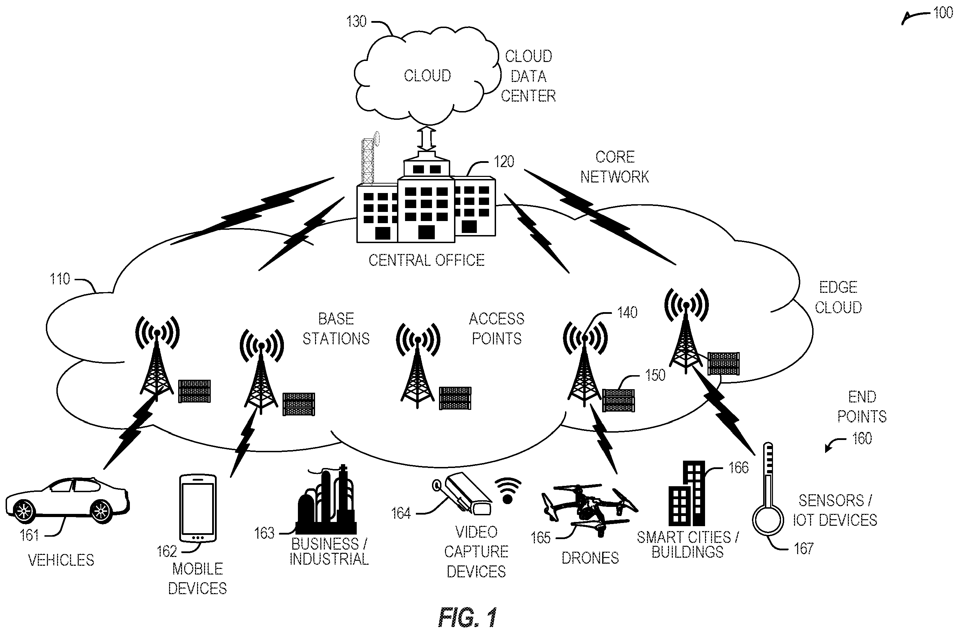

FIG. 1 is a block diagram 100 showing an overview of a configuration for edge computing, which includes a layer of processing referred to in many of the following examples as an "edge cloud". As shown, the edge cloud 110 is co-located at an edge location, such as an access point or base station 140, a local processing hub 150, or a central office 120, and thus may include multiple entities, devices, and equipment instances. The edge cloud 110 is located much closer to the endpoint (consumer and producer) data sources 160 (e.g., autonomous vehicles 161, user equipment 162, business and industrial equipment 163, video capture devices 164, drones 165, smart cities and building devices 166, sensors and IoT devices 167, etc.) than the cloud data center 130. Compute, memory, and storage resources which are offered at the edges in the edge cloud 110 are critical to providing ultra-low latency response times for services and functions used by the endpoint data sources 160 as well as reduce network backhaul traffic from the edge cloud 110 toward cloud data center 130 thus improving energy consumption and overall network usages among other benefits.

Compute, memory, and storage are scarce resources, and generally decrease depending on the edge location (e.g., fewer processing resources being available at consumer endpoint devices, than at a base station, than at a central office). However, the closer that the edge location is to the endpoint (e.g., user equipment (UE)), the more that space and power is often constrained. Thus, edge computing attempts to reduce the amount of resources needed for network services, through the distribution of more resources which are located closer both geographically and in network access time. In this manner, edge computing attempts to bring the compute resources to the workload data where appropriate, or, bring the workload data to the compute resources.

The following describes aspects of an edge cloud architecture that covers multiple potential deployments and addresses restrictions that some network operators or service providers may have in their own infrastructures. These include, variation of configurations based on the edge location (because edges at a base station level, for instance, may have more constrained performance and capabilities in a multi-tenant scenario); configurations based on the type of compute, memory, storage, fabric, acceleration, or like resources available to edge locations, tiers of locations, or groups of locations; the service, security, and management and orchestration capabilities; and related objectives to achieve usability and performance of end services. These deployments may accomplish processing in network layers that may be considered as "near edge," "close edge," "local edge," "middle edge," or "far edge" layers, depending on latency, distance, and timing characteristics.

Edge computing is a developing paradigm where computing is performed at or closer to the "edge" of a network, typically through the use of a compute platform (e.g., a generic compute platform, x86 or ARM compute hardware architecture) with accelerators (e.g. FPGA, GPU) implemented at base stations, gateways, network routers, or other devices which are much closer to endpoint devices producing and consuming the data (e.g., at a "local edge", "close edge", or "near edge"). For example, edge gateway servers may be equipped with pools of memory and storage resources to perform computation in real-time for low latency use-cases (e.g., autonomous driving, industrial IOT or video surveillance) for connected client devices. Or as an example, base stations may be augmented with compute and acceleration resources to directly process service workloads for connected user equipment, without further communicating data via backhaul networks. Or as another example, central office network management hardware may be replaced with standardized compute hardware that performs virtualized network functions and offers compute resources for the execution of services and consumer functions for connected devices. Within edge computing networks, there may be scenarios in services which the compute resource will be "moved" to the data, as well as scenarios in which the data will be "moved" to the compute resource. Or as an example, base station compute, acceleration and network resources can provide services in order to scale to workload demands on an as needed basis by activating dormant capacity (subscription, capacity on demand) in order to manage corner cases, emergencies or to provide longevity for deployed resources over a significantly longer implemented lifecycle.

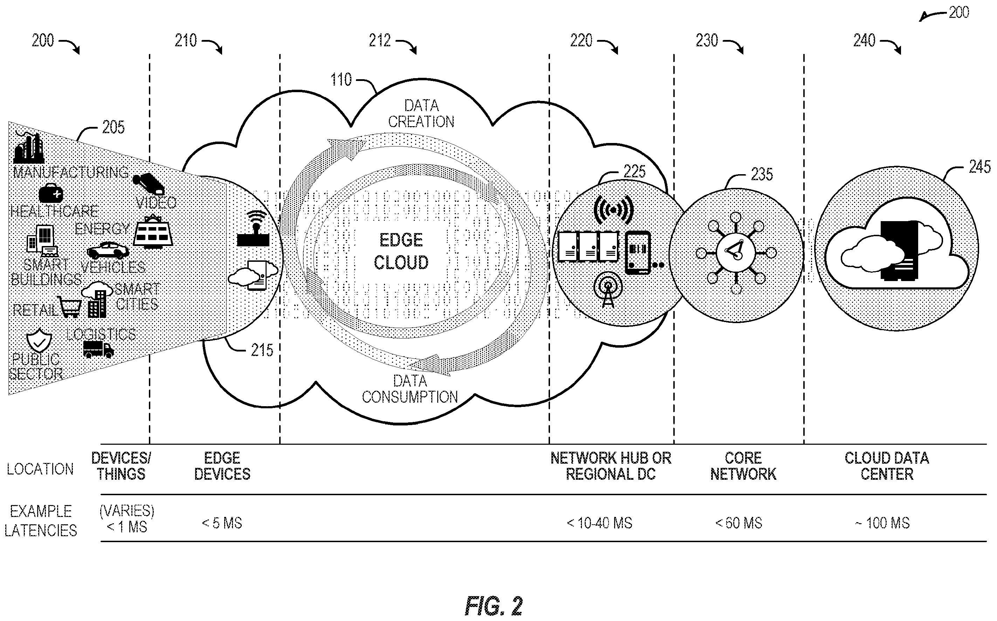

FIG. 2 illustrates operational layers among endpoints, an edge cloud, and cloud computing environments. Specifically, FIG. 2 depicts examples of computational use cases 205, utilizing the edge cloud 110 among multiple illustrative layers of network computing. The layers begin at an endpoint (devices and things) layer 200, which accesses the edge cloud 110 to conduct data creation, analysis, and data consumption activities. The edge cloud 110 may span multiple network layers, such as an edge devices layer 210 having gateways, on-premise servers, or network equipment (nodes 215) located in physically proximate edge systems; a network access layer 220, encompassing base stations, radio processing units, network hubs, regional data centers (DC), or local network equipment (equipment 225); and any equipment, devices, or nodes located therebetween (in layer 212, not illustrated in detail). The network communications within the edge cloud 110 and among the various layers may occur via any number of wired or wireless mediums, including via connectivity architectures and technologies not depicted.

Examples of latency, resulting from network communication distance and processing time constraints, may range from less than a millisecond (ms) when among the endpoint layer 200, under 5 ms at the edge devices layer 210, to even between 10 to 40 ms when communicating with nodes at the network access layer 220. Beyond the edge cloud 110 are core network 230 and cloud data center 240 layers, each with increasing latency (e.g., between 50-60 ms at the core network layer 230, to 100 or more ms at the cloud data center layer). As a result, operations at a core network data center 235 or a cloud data center 245, with latencies of at least 50 to 100 ms or more, will not be able to accomplish many time-critical functions of the use cases 205. Each of these latency values are provided for purposes of illustration and contrast; it will be understood that the use of other access network mediums and technologies may further reduce the latencies. In some examples, respective portions of the network may be categorized as "close edge", "local edge", "near edge", "middle edge", or "far edge" layers, relative to a network source and destination. For instance, from the perspective of the core network data center 235 or a cloud data center 245, a central office or content data network may be considered as being located within a "near edge" layer ("near" to the cloud, having high latency values when communicating with the devices and endpoints of the use cases 205), whereas an access point, base station, on-premise server, or network gateway may be considered as located within a "far edge" layer ("far" from the cloud, having low latency values when communicating with the devices and endpoints of the use cases 205). It will be understood that other categorizations of a particular network layer as constituting a "close", "local", "near", "middle", or "far" edge may be based on latency, distance, number of network hops, or other measurable characteristics, as measured from a source in any of the examples 25-32.

The various use cases 205 may access resources under usage pressure from incoming streams, due to multiple services utilizing the edge cloud. To achieve results with low latency, the services executed within the edge cloud 110 balance varying requirements in terms of: (a) Priority (throughput or latency) and QoS (e.g., traffic for an autonomous car may have higher priority than a temperature sensor in terms of response time requirement; or, a performance sensitivity/bottleneck may exist at a compute/accelerator, memory, storage, or network resource, depending on the application); (b) Reliability and Resiliency (e.g., some input streams need to be acted upon and the traffic routed with mission-critical reliability, where as some other input streams may be tolerate an occasional failure, depending on the application); and (c) Physical constraints (e.g., power, cooling and form-factor).

The end-to-end service view for these use cases involves the concept of a service-flow and is associated with a transaction. The transaction details the overall service requirement for the entity consuming the service, as well as the associated services for the resources, workloads, workflows, and business functional and business level requirements. The services executed with the "terms" described may be managed at each layer in a way to assure real time, and runtime contractual compliance for the transaction during the lifecycle of the service. When a component in the transaction is missing its agreed to SLA, the system as a whole (components in the transaction) may provide the ability to (1) understand the impact of the SLA violation, and (2) augment other components in the system to resume overall transaction SLA, and (3) implement steps to remediate.

Thus, with these variations and service features in mind, edge computing within the edge cloud 110 may provide the ability to serve and respond to multiple applications of the use cases 205 (e.g., object tracking, video surveillance, connected cars, etc.) in real-time or near real-time, and meet ultra-low latency requirements for these multiple applications. These advantages enable a whole new class of applications (Virtual Network Functions (VNFs), Function as a Service (FaaS), Edge as a Service (EaaS), standard processes, etc.), which cannot leverage conventional cloud computing due to latency or other limitations.

However, with the advantages of edge computing comes the following caveats. The devices located at the edge are often resource constrained and therefore there is pressure on usage of edge resources. Typically, this is addressed through the pooling of memory and storage resources for use by multiple users (tenants) and devices. The edge may be power and cooling constrained and therefore the power usage needs to be accounted for by the applications that are consuming the most power. There may be inherent power-performance tradeoffs in these pooled memory resources, as many of them are likely to use emerging memory technologies, where more power requires greater memory bandwidth. Likewise, improved security of hardware and root of trust trusted functions are also required because edge locations may be unmanned and may even need permissioned access (e.g., when housed in a third-party location). Such issues are magnified in the edge cloud 110 in a multi-tenant, multi-owner, or multi-access setting, where services and applications are requested by many users, especially as network usage dynamically fluctuates and the composition of the multiple stakeholders, use cases, and services changes. Accordingly, by being highly adaptable to adverse resource constraints and/or network fluctuations, examples disclosed herein can mitigate these issues by effectively assigning workloads between different edges.

At a more generic level, an edge computing system may be described to encompass any number of deployments at the previously discussed layers operating in the edge cloud 110 (network layers 200-240), which provide coordination from client and distributed computing devices. One or more edge gateway nodes, one or more edge aggregation nodes, and one or more core data centers may be distributed across layers of the network to provide an implementation of the edge computing system by or on behalf of a telecommunication service provider ("telco", or "TSP"), internet-of-things service provider, cloud service provider (CSP), enterprise entity, or any other number of entities. Various implementations and configurations of the edge computing system may be provided dynamically, such as when orchestrated to meet service objectives.

Consistent with the examples provided herein, a client compute node may be embodied as any type of endpoint component, device, appliance, or other thing capable of communicating as a producer or consumer of data. Further, the label "node" or "device" as used in the edge computing system does not necessarily mean that such node or device operates in a client or agent/minion/follower role; rather, any of the nodes or devices in the edge computing system refer to individual entities, nodes, or subsystems which include discrete or connected hardware or software configurations to facilitate or use the edge cloud 110.

As such, the edge cloud 110 is formed from network components and functional features operated by and within edge gateway nodes, edge aggregation nodes, or other edge compute nodes among network layers 210-230. The edge cloud 110 thus may be embodied as any type of network that provides edge computing and/or storage resources which are proximately located to radio access network (RAN) capable endpoint devices (e.g., mobile computing devices, IoT devices, smart devices, etc.), which are discussed herein. In other words, the edge cloud 110 may be envisioned as an "edge" which connects the endpoint devices and traditional network access points that serve as an ingress point into service provider core networks, including mobile carrier networks (e.g., Global System for Mobile Communications (GSM) networks, Long-Term Evolution (LTE) networks, 5G/6G networks, etc.), while also providing storage and/or compute capabilities. Other types and forms of network access (e.g., Wi-Fi, long-range wireless, wired networks including optical networks) may also be utilized in place of or in combination with such 3GPP carrier networks.

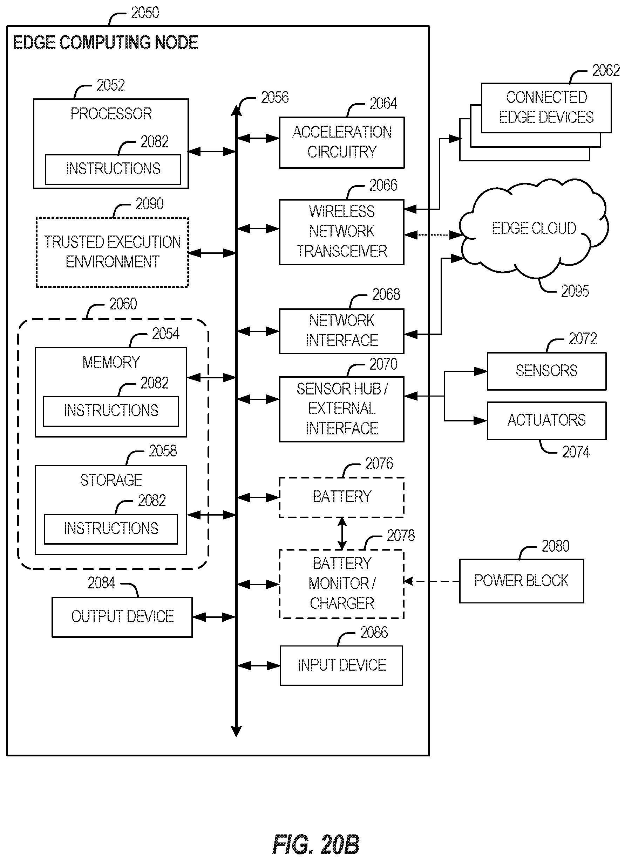

The network components of the edge cloud 110 may be servers, multi-tenant servers, appliance computing devices, and/or any other type of computing devices. For example, the edge cloud 110 may include an appliance computing device that is a self-contained electronic device including a housing, a chassis, a case or a shell. In some circumstances, the housing may be dimensioned for portability such that it can be carried by a human and/or shipped. Example housings may include materials that form one or more exterior surfaces that partially or fully protect contents of the appliance, in which protection may include weather protection, hazardous environment protection (e.g., EMI, vibration, extreme temperatures), and/or enable submergibility. Example housings may include power circuitry to provide power for stationary and/or portable implementations, such as AC power inputs, DC power inputs, AC/DC or DC/AC converter(s), power regulators, transformers, charging circuitry, batteries, wired inputs and/or wireless power inputs. Example housings and/or surfaces thereof may include or connect to mounting hardware to enable attachment to structures such as buildings, telecommunication structures (e.g., poles, antenna structures, etc.) and/or racks (e.g., server racks, blade mounts, etc.). Example housings and/or surfaces thereof may support one or more sensors (e.g., temperature sensors, vibration sensors, light sensors, acoustic sensors, capacitive sensors, proximity sensors, etc.). One or more such sensors may be contained in, carried by, or otherwise embedded in the surface and/or mounted to the surface of the appliance. Example housings and/or surfaces thereof may support mechanical connectivity, such as propulsion hardware (e.g., wheels, propellers, etc.) and/or articulating hardware (e.g., robot arms, pivotable appendages, etc.). In some circumstances, the sensors may include any type of input devices such as user interface hardware (e.g., buttons, switches, dials, sliders, etc.). In some circumstances, example housings include output devices contained in, carried by, embedded therein and/or attached thereto. Output devices may include displays, touchscreens, lights, LEDs, speakers, I/O ports (e.g., USB), etc. In some circumstances, edge devices are devices presented in the network for a specific purpose (e.g., a traffic light), but may have processing and/or other capacities that may be utilized for other purposes. Such edge devices may be independent from other networked devices and may be provided with a housing having a form factor suitable for its primary purpose; yet be available for other compute tasks that do not interfere with its primary task. Edge devices include Internet of Things devices. The appliance computing device may include hardware and software components to manage local issues such as device temperature, vibration, resource utilization, updates, power issues, physical and network security, etc. Example hardware for implementing an appliance computing device is described in conjunction with FIG. 20B. The edge cloud 110 may also include one or more servers and/or one or more multi-tenant servers. Such a server may include an operating system and a virtual computing environment. A virtual computing environment may include a hypervisor managing (spawning, deploying, destroying, etc.) one or more virtual machines, one or more containers, etc. Such virtual computing environments provide an execution environment in which one or more applications and/or other software, code or scripts may execute while being isolated from one or more other applications, software, code or scripts.

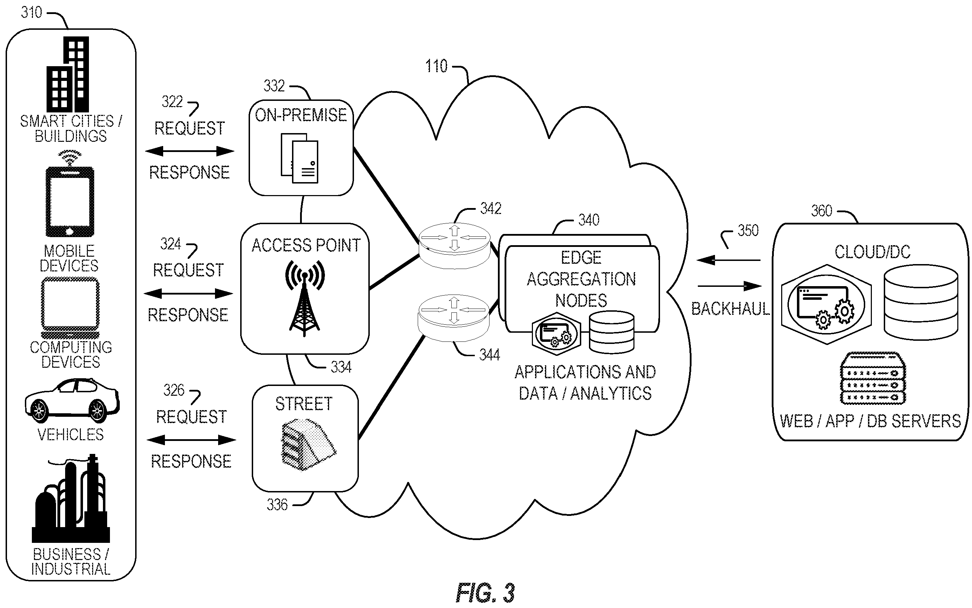

FIG. 3 illustrates a block diagram of an example environment 300 in which various client endpoints 310 (in the form of mobile devices, computers, autonomous vehicles, business computing equipment, industrial processing equipment) exchange requests and responses with the example edge cloud 110. For instance, client endpoints 310 may obtain network access via a wired broadband network, by exchanging requests and responses 322 through an on-premise network system 332. Some client endpoints 310, such as mobile computing devices, may obtain network access via a wireless broadband network, by exchanging requests and responses 324 through an access point (e.g., cellular network tower) 334. Some client endpoints 310, such as autonomous vehicles may obtain network access for requests and responses 326 via a wireless vehicular network through a street-located network system 336. However, regardless of the type of network access, the TSP may deploy aggregation points 342, 344 within the edge cloud 110 to aggregate traffic and requests. Thus, within the edge cloud 110, the TSP may deploy various compute and storage resources, such as at edge aggregation nodes 340, to provide requested content. The edge aggregation nodes 340 and other systems of the edge cloud 110 are connected to a cloud or data center 360, which uses a backhaul network 350 to fulfill higher-latency requests from a cloud/data center for websites, applications, database servers, etc. Additional or consolidated instances of the edge aggregation nodes 340 and the aggregation points 342, 344, including those deployed on a single server framework, may also be present within the edge cloud 110 or other areas of the TSP infrastructure.

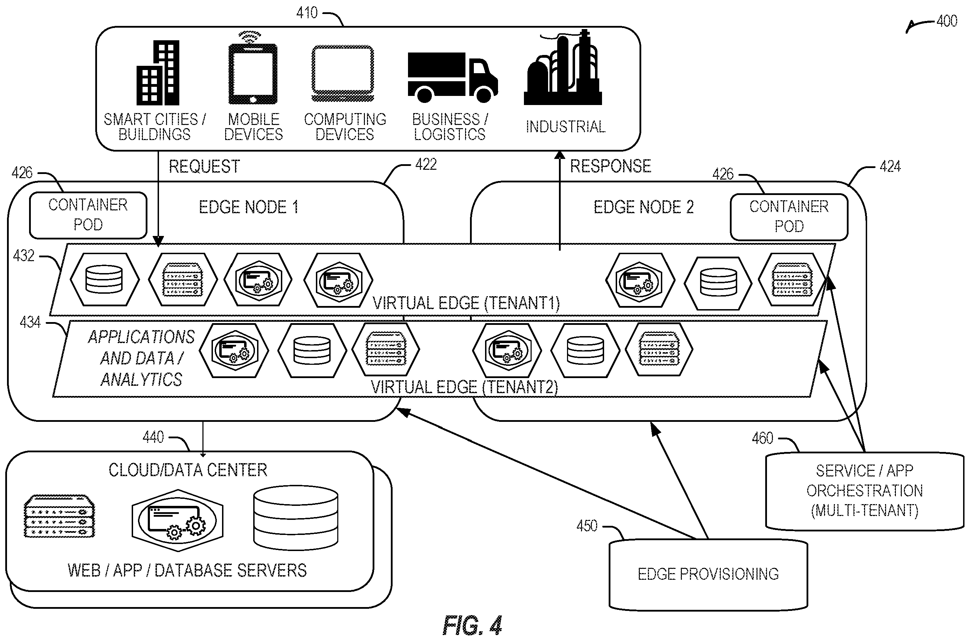

FIG. 4 illustrates deployment and orchestration for virtual edge configurations across an edge computing system operated among multiple edge nodes and multiple tenants. Specifically, FIG. 4 depicts coordination of a first edge node 422 and a second edge node 424 in an edge computing system 400, to fulfill requests and responses for various client endpoints 410 (e.g., smart cities / building systems, mobile devices, computing devices, business/logistics systems, industrial systems, etc.), which access various virtual edge instances. Here, the virtual edge instances 432, 434 provide edge compute capabilities and processing in an edge cloud, with access to a cloud/data center 440 for higher-latency requests for websites, applications, database servers, etc. However, the edge cloud enables coordination of processing among multiple edge nodes for multiple tenants or entities.

In the example of FIG. 4, these virtual edge instances include: a first virtual edge 432, offered to a first tenant (Tenant 1), which offers a first combination of edge storage, computing, and services; and a second virtual edge 434, offering a second combination of edge storage, computing, and services. The virtual edge instances 432, 434 are distributed among the edge nodes 422, 424, and may include scenarios in which a request and response are fulfilled from the same or different edge nodes. The configuration of the edge nodes 422, 424 to operate in a distributed yet coordinated fashion occurs based on edge provisioning functions 450. The functionality of the edge nodes 422, 424 to provide coordinated operation for applications and services, among multiple tenants, occurs based on orchestration functions 460.

It should be understood that some of the devices 410 are multi-tenant devices where Tenant 1 may function within a tenant1 "slice" while a Tenant 2 may function within a tenant2 'slice' (and, in further examples, additional or sub-tenants may exist; and each tenant may even be specifically entitled and transactionally tied to a specific set of features all the way day to specific hardware features). A trusted multi-tenant device may further contain a tenant-specific cryptographic key such that the combination of key and slice may be considered a "root of trust" (RoT) or tenant specific RoT. A RoT may further be computed dynamically composed using a DICE (Device Identity Composition Engine) architecture such that a single DICE hardware building block may be used to construct layered trusted computing base contexts for layering of device capabilities (such as a Field Programmable Gate Array (FPGA)). The RoT may further be used for a trusted computing context to enable a "fan-out" that is useful for supporting multi-tenancy. Within a multi-tenant environment, the respective edge nodes 422, 424 may operate as security feature enforcement points for local resources allocated to multiple tenants per node. Additionally, tenant runtime and application execution (e.g., in instances 432, 434) may serve as an enforcement point for a security feature that creates a virtual edge abstraction of resources spanning potentially multiple physical hosting platforms. Finally, the orchestration functions 460 at an orchestration entity may operate as a security feature enforcement point for marshalling resources along tenant boundaries.

Edge computing nodes may partition resources (memory, central processing unit (CPU), graphics processing unit (GPU), interrupt controller, input/output (I/O) controller, memory controller, bus controller, etc.) where respective partitioning may contain a RoT capability and where fan-out and layering according to a DICE model may further be applied to Edge Nodes. Cloud computing nodes consisting of containers, FaaS engines, Servlets, servers, or other computation abstraction may be partitioned according to a DICE layering and fan-out structure to support a RoT context for each. Accordingly, the respective devices 410, 422, and 440 spanning RoTs may coordinate the establishment of a distributed trusted computing base (DTCB) such that a tenant-specific virtual trusted secure channel linking all elements end to end can be established.

Further, it will be understood that a container may have data or workload specific keys protecting its content from a previous edge node. As part of migration of a container, a pod controller at a source edge node may obtain a migration key from a target edge node pod controller where the migration key is used to wrap the container-specific keys. When the container/pod is migrated to the target edge node, the unwrapping key is exposed to the pod controller that then decrypts the wrapped keys. The keys may now be used to perform operations on container specific data. The migration functions may be gated by properly attested edge nodes and pod managers (as described above).

In further examples, an edge computing system is extended to provide for orchestration of multiple applications through the use of containers (a contained, deployable unit of software that provides code and needed dependencies) in a multi-owner, multi-tenant environment. A multi-tenant orchestrator may be used to perform key management, trust anchor management, and other security functions related to the provisioning and lifecycle of the trusted 'slice' concept in FIG. 4. For instance, an edge computing system may be configured to fulfill requests and responses for various client endpoints from multiple virtual edge instances (and, from a cloud or remote data center). The use of these virtual edge instances may support multiple tenants and multiple applications (e.g., augmented reality (AR)/virtual reality (VR), enterprise applications, content delivery, gaming, compute offload) simultaneously. Further, there may be multiple types of applications within the virtual edge instances (e.g., normal applications; latency sensitive applications; latency-critical applications; user plane applications; networking applications; etc.). The virtual edge instances may also be spanned across systems of multiple owners at different geographic locations (or, respective computing systems and resources which are co-owned or co-managed by multiple owners).

For instance, each of the edge nodes 422, 424 may implement the use of containers, such as with the use of a container "pod" 426, 428 providing a group of one or more containers. In a setting that uses one or more container pods, a pod controller or orchestrator is responsible for local control and orchestration of the containers in the pod. Various edge node resources (e.g., storage, compute, services, depicted with hexagons) provided for the respective edge slices 432, 434 are partitioned according to the needs of each container.

With the use of container pods, a pod controller oversees the partitioning and allocation of containers and resources. The pod controller receives instructions from an orchestrator (e.g., the orchestrator 460) that instructs the controller on how best to partition physical resources and for what duration, such as by receiving key performance indicator (KPI) targets based on SLA contracts. The pod controller determines which container requires which resources and for how long in order to complete the workload and satisfy the SLA. The pod controller also manages container lifecycle operations such as: creating the container, provisioning it with resources and applications, coordinating intermediate results between multiple containers working on a distributed application together, dismantling containers when workload completes, and the like. Additionally, a pod controller may serve a security role that prevents assignment of resources until the right tenant authenticates or prevents provisioning of data or a workload to a container until an attestation result is satisfied.

Also, with the use of container pods, tenant boundaries can still exist but in the context of each pod of containers. If each tenant specific pod has a tenant specific pod controller, there will be a shared pod controller that consolidates resource allocation requests to avoid typical resource starvation situations. Further controls may be provided to ensure attestation and trustworthiness of the pod and pod controller. For instance, the orchestrator 460 may provision an attestation verification policy to local pod controllers that perform attestation verification. If an attestation satisfies a policy for a first tenant pod controller but not a second tenant pod controller, then the second pod could be migrated to a different edge node that does satisfy it. Alternatively, the first pod may be allowed to execute and a different shared pod controller is installed and invoked prior to the second pod executing.

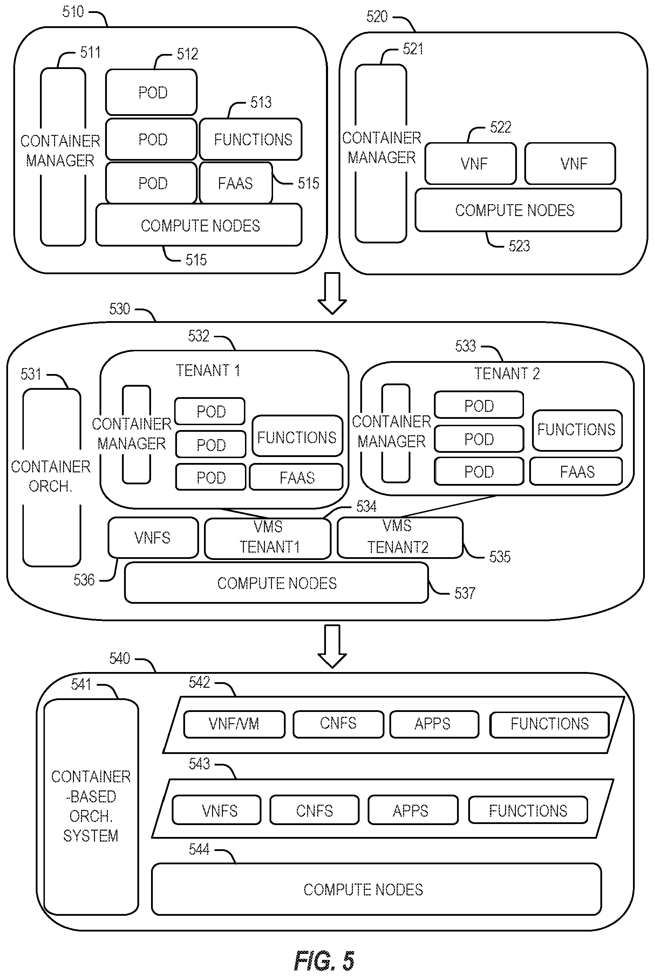

FIG. 5 illustrates additional compute arrangements deploying containers in an edge computing system. The example pod deployment examples of FIG. 5 can be implemented in conjunction with workload deployment of examples disclosed herein in which pods are transferred between different edges along a chain (e.g., a hierarchical chain), for example, so that the pods can executed by available compute resources. As a simplified example, system arrangements 510, 520 depict settings in which a pod controller (e.g., container managers 511, 521, and a container orchestrator 531) is adapted to launch containerized pods, functions, and functions-as-a-service instances through execution via compute nodes (515 in arrangement 510), or to separately execute containerized virtualized network functions through execution via compute nodes (523 in arrangement 520). This arrangement is adapted for use of multiple tenants in an example system arrangement 530 (using compute nodes 537), where containerized pods (e.g., pods 512), functions (e.g., functions 513, VNFs 522, 536), and functions-as-a-service instances (e.g., FaaS instance 515) are launched within virtual machines (e.g., VMs 534, 535 for tenants 532, 533) specific to respective tenants (aside the execution of virtualized network functions). This arrangement is further adapted for use in system arrangement 540, which provides containers 542, 543, or execution of the various functions, applications, and functions on compute nodes 544, as coordinated by an container-based orchestration system 541.

The system arrangements of depicted in FIG. 5 provides an architecture that treats VMs, Containers, and Functions equally in terms of application composition (and resulting applications are combinations of these three ingredients). Each ingredient may involve use of one or more accelerator (FPGA, ASIC) components as a local backend. In this manner, applications can be split across multiple edge owners, coordinated by an orchestrator.

In the context of FIG. 5, the pod controller/container manager, container orchestrator, and individual nodes may provide a security enforcement point. However, tenant isolation may be orchestrated where the resources allocated to a tenant are distinct from resources allocated to a second tenant, but edge owners cooperate to ensure resource allocations are not shared across tenant boundaries. Or, resource allocations could be isolated across tenant boundaries, as tenants could allow "use" via a subscription or transaction/contract basis. In these contexts, virtualization, containerization, enclaves and hardware partitioning schemes may be used by edge owners to enforce tenancy. Other isolation environments may include: bare metal (dedicated) equipment, virtual machines, containers, virtual machines on containers, or combinations thereof.

In further examples, aspects of software-defined or controlled silicon hardware, and other configurable hardware, may integrate with the applications, functions, and services an edge computing system. Software defined silicon may be used to ensure the ability for some resource or hardware ingredient to fulfill a contract or service level agreement, based on the ingredient's ability to remediate a portion of itself or the workload (e.g., by an upgrade, reconfiguration, or provision of new features within the hardware configuration itself).

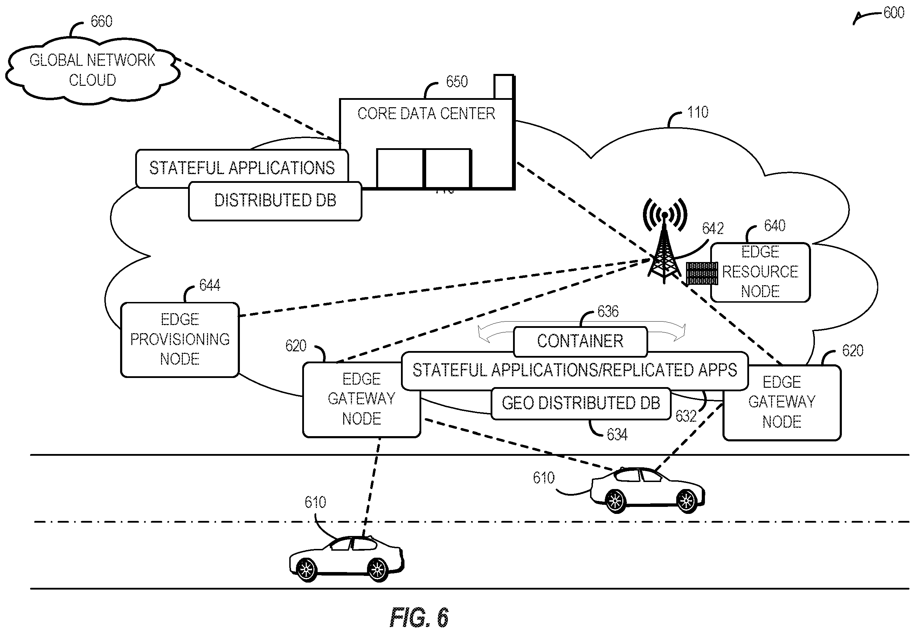

It should be appreciated that the edge computing systems and arrangements discussed herein may be applicable in various solutions, services, and/or use cases involving mobility. As an example, FIG. 6 shows an example simplified vehicle compute and communication use case involving mobile access to applications in an example edge computing system 600 that implements an edge cloud such as the edge cloud 110 of FIG.1. In this use case, respective client compute nodes 610 may be embodied as in-vehicle compute systems (e.g., in-vehicle navigation and/or infotainment systems) located in corresponding vehicles which communicate with example edge gateway nodes 620 during traversal of a roadway. For instance, the edge gateway nodes 620 may be located in a roadside cabinet or other enclosure built-into a structure having other, separate, mechanical utility, which may be placed along the roadway, at intersections of the roadway, or other locations near the roadway. As respective vehicles traverse along the roadway, the connection between its client compute node 610 and a particular one of the edge gateway nodes 620 may propagate so as to maintain a consistent connection and context for the example client compute node 610. Likewise, mobile edge nodes may aggregate at the high priority services or according to the throughput or latency resolution requirements for the underlying service(s) (e.g., in the case of drones). The respective edge gateway devices 620 include an amount of processing and storage capabilities and, as such, some processing and/or storage of data for the client compute nodes 610 may be performed on one or more of the edge gateway nodes 620.

The edge gateway nodes 620 may communicate with one or more edge resource nodes 640, which are illustratively embodied as compute servers, appliances or components located at or in a communication base station 642 (e.g., a based station of a cellular network). As discussed above, the respective edge resource node(s) 640 include an amount of processing and storage capabilities and, as such, some processing and/or storage of data for the client compute nodes 610 may be performed on the edge resource node(s) 640. For example, the processing of data that is less urgent or important may be performed by the edge resource node(s) 640, while the processing of data that is of a higher urgency or importance may be performed by the edge gateway devices 620 (depending on, for example, the capabilities of each component, or information in the request indicating urgency or importance). Based on data access, data location or latency, work may continue on edge resource nodes when the processing priorities change during the processing activity. Likewise, configurable systems or hardware resources themselves can be activated (e.g., through a local orchestrator) to provide additional resources to meet the new demand (e.g., adapt the compute resources to the workload data).

The edge resource node(s) 640 also communicate with the core data center 650, which may include compute servers, appliances, and/or other components located in a central location (e.g., a central office of a cellular communication network). The example core data center 650 may provide a gateway to the global network cloud 660 (e.g., the Internet) for the edge cloud 110 operations formed by the edge resource node(s) 640 and the edge gateway devices 620. Additionally, in some examples, the core data center 650 may include an amount of processing and storage capabilities and, as such, some processing and/or storage of data for the client compute devices may be performed on the core data center 650 (e.g., processing of low urgency or importance, or high complexity).

The edge gateway nodes 620 or the edge resource node(s) 640 may offer the use of stateful applications 632 and a geographic distributed database 634. Although the applications 632 and database 634 are illustrated as being horizontally distributed at a layer of the example edge cloud 110, it will be understood that resources, services, or other components of the application may be vertically distributed throughout the edge cloud (including, part of the application executed at the client compute node 610, other parts at the edge gateway nodes 620 or the edge resource node(s) 640, etc.). Additionally, as stated previously, there can be peer relationships at any level to meet service objectives and obligations. Example disclosed herein can enable effective control of resources to meet service objectives and obligations based on an SLA, for example. Further, the data for a specific client or application can move from edge to edge based on changing conditions (e.g., based on acceleration resource availability, following the car movement, etc.). For instance, based on the "rate of decay" of access, prediction can be made to identify the next owner to continue, or when the data or computational access will no longer be viable. These and other services may be utilized to complete the work that is needed to keep the transaction compliant and lossless.

In further scenarios, a container 636 (or pod of containers) may be flexibly migrated from one of the edge nodes 620 to other edge nodes (e.g., another one of edge nodes 620, one of the edge resource node(s) 640, etc.) such that the container with an application and workload does not need to be reconstituted, recompiled, re-interpreted in order for migration to work. However, in such settings, there may be some remedial or "swizzling" translation operations applied. For example, the physical hardware at the edge resource node(s) 640 may differ from the hardware at the edge gateway nodes 620 and therefore, the hardware abstraction layer (HAL) that makes up the bottom edge of the container will be re-mapped to the physical layer of the target edge node. This may involve some form of late-binding technique, such as binary translation of the HAL from the container native format to the physical hardware format, or may involve mapping interfaces and operations. A pod controller may be used to drive the interface mapping as part of the container lifecycle, which includes migration to/from different hardware environments.

The scenarios encompassed by FIG. 6 may utilize various types of mobile edge nodes, such as an edge node hosted in a vehicle (car/truck/tram/train) or other mobile unit, as the edge node will move to other geographic locations along the platform hosting it. With vehicle-to-vehicle communications, individual vehicles may even act as network edge nodes for other cars, (e.g., to perform caching, reporting, data aggregation, etc.). Thus, it will be understood that the application components provided in various edge nodes may be distributed in static or mobile settings, including coordination between some functions or operations at individual endpoint devices or the edge gateway nodes 620, some others at the edge resource node(s) 640, and others in the core data center 650 or global network cloud 660.

In further configurations, the edge computing system may implement FaaS computing capabilities through the use of respective executable applications and functions. In an example, a developer writes function code (e.g., "computer code" herein) representing one or more computer functions, and the function code is uploaded to a FaaS platform provided by, for example, an edge node or data center. A trigger such as, for example, a service use case or an edge processing event, initiates the execution of the function code with the FaaS platform.

In an example of FaaS, a container is used to provide an environment in which function code (e.g., an application which may be provided by a third party) is executed. The container may be any isolated-execution entity such as a process, a Docker or Kubemetes (K8s) container, a virtual machine, etc. Within the edge computing system, various datacenter, edge, and endpoint (including mobile) devices are used to "spin up" functions (e.g., activate and/or allocate function actions) that are scaled on demand. The function code gets executed on the physical infrastructure (e.g., edge computing node) device and underlying virtualized containers. Finally, container is "spun down" (e.g., deactivated and/or deallocated) on the infrastructure in response to the execution being completed.

Further aspects of FaaS may enable deployment of edge functions in a service fashion, including a support of respective functions that support edge computing as a service (Edge-as-a-Service or "EaaS"). Additional features of FaaS may include: a granular billing component that enables customers (e.g., computer code developers) to pay only when their code gets executed; common data storage to store data for reuse by one or more functions; orchestration and management among individual functions; function execution management, parallelism, and consolidation; management of container and function memory spaces; coordination of acceleration resources available for functions; and distribution of functions between containers (including "warm" containers, already deployed or operating, versus "cold" which require initialization, deployment, or configuration).

The edge computing system 600 can include or be in communication with an edge provisioning node 644. The edge provisioning node 644 can distribute software such as the example computer readable instructions 2082 of FIG. 20B, to various receiving parties for implementing any of the methods described herein. The example edge provisioning node 644 may be implemented by any computer server, home server, content delivery network, virtual server, software distribution system, central facility, storage device, storage node, data facility, cloud service, etc., capable of storing and/or transmitting software instructions (e.g., code, scripts, executable binaries, containers, packages, compressed files, and/or derivatives thereof) to other computing devices. Component(s) of the example edge provisioning node 644 may be located in a cloud, in a local area network, in an edge network, in a wide area network, on the Internet, and/or any other location communicatively coupled with the receiving party(ies). The receiving parties may be customers, clients, associates, users, etc. of the entity owning and/or operating the edge provisioning node 644. For example, the entity that owns and/or operates the edge provisioning node 644 may be a developer, a seller, and/or a licensor (or a customer and/or consumer thereof) of software instructions such as the example computer readable instructions 2082 of FIG. 20B. The receiving parties may be consumers, service providers, users, retailers, OEMs, etc., who purchase and/or license the software instructions for use and/or re-sale and/or sub-licensing.

In an example, edge provisioning node 644 includes one or more servers and one or more storage devices. The storage devices host computer readable instructions such as the example computer readable instructions 2082 of FIG. 20B, as described below. Similarly to edge gateway devices 620 described above, the one or more servers of the edge provisioning node 644 are in communication with a base station 642 or other network communication entity. In some examples, the one or more servers are responsive to requests to transmit the software instructions to a requesting party as part of a commercial transaction. Payment for the delivery, sale, and/or license of the software instructions may be handled by the one or more servers of the software distribution platform and/or via a third party payment entity. The servers enable purchasers and/or licensors to download the computer readable instructions 2082 from the edge provisioning node 644. For example, the software instructions, which may correspond to the example computer readable instructions 2082 of FIG. 20B, may be downloaded to the example processor platform/s, which is to execute the computer readable instructions 2082 to implement the methods described herein.

In some examples, the processor platform(s) that execute the computer readable instructions 2082 can be physically located in different geographic locations, legal jurisdictions, etc. In some examples, one or more servers of the edge provisioning node 644 periodically offer, transmit, and/or force updates to the software instructions (e.g., the example computer readable instructions 2082 of FIG. 20B) to ensure improvements, patches, updates, etc. are distributed and applied to the software instructions implemented at the end user devices. In some examples, different components of the computer readable instructions 2082 can be distributed from different sources and/or to different processor platforms; for example, different libraries, plug-ins, components, and other types of compute modules, whether compiled or interpreted, can be distributed from different sources and/or to different processor platforms. For example, a portion of the software instructions (e.g., a script that is not, in itself, executable) may be distributed from a first source while an interpreter (capable of executing the script) may be distributed from a second source.

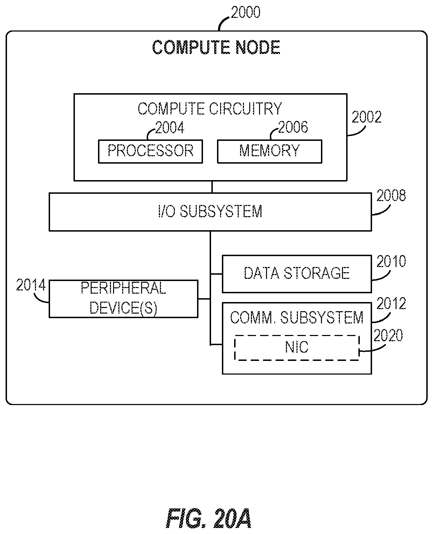

In further examples, any of the compute nodes or devices discussed with reference to the present edge computing systems and environment may be fulfilled based on the components depicted below in connection with FIGS. 20A and 20B. Respective edge compute nodes may be embodied as a type of device, appliance, computer, or other "thing" capable of communicating with other edge, networking, or endpoint components. For example, an edge compute device may be embodied as a personal computer, server, smartphone, a mobile compute device, a smart appliance, an in-vehicle compute system (e.g., a navigation system), a self-contained device having an outer case, shell, etc., or other device or system capable of performing the described functions.

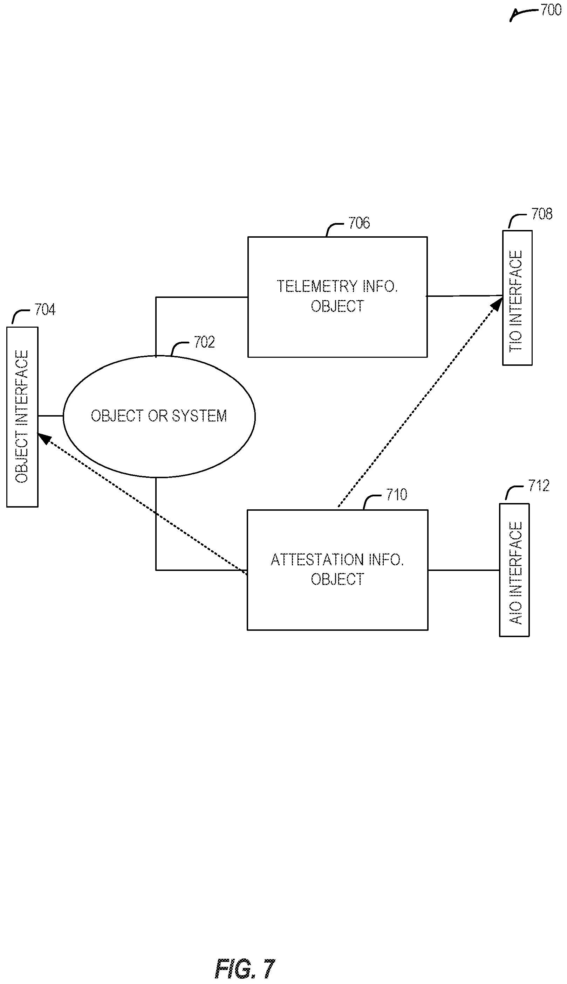

FIG. 7 is a block diagram of an example relationship 700 among an example object 702 that includes an object interface 704, an example TIO 706 that includes an example TIO interface 708, and an example attestation information object (AIO) 710 that includes an AIO interface 712.

The example object 702 may be any type of object, system, or subsystem of a device (e.g., a peripheral device, an edge computing device, a cloud computing device, etc.) For example, the object 702 may be a network interface card, an audio interface, a co-processor (e.g., a graphics processing unit (GPU)), a portable security unit, a power supply unit, a host bus adapter (HBA), a field programmable gate array (FPGA), a cryptographic offload unit, a compression offload unit, etc. The object 702 may be a subsystem of a system on a chip (SoC) intellectual property block such as an input/output (IO) controller, a memory controller, a bus master controller. etc. In other examples, the object 702 may be a subsystem of a central processing unit (CPU) array controller, a microprocessor other than the CPU, or as a motherboard intellectual property block. In other examples, the object may be a subsystem of a CPU core, a CPU debug subsystem, a CPU performance monitoring subsystem, etc.

The example object interface 704 exposes an interface through which other objects and systems may access the object 702. For example, another object or system may trigger an action to be performed by the object 702 (e.g., output a signal, process data, etc.) and/or may retrieve data from the object (e.g., data output from a sensor, data processed by the object 702, etc.). The implementation of the object interface 704 depends on the type of the object.

The example telemetry information object 706 is an object to collect and distribute telemetry information for an object. As used herein, the term "object" refers to a logical block of machine-readable definitions, data structures, instructions, etc., and/or a physical block (e.g., a block or portion of memory and/or storage) including the logical block. The logical block can implement a function, an interface, and/or otherwise a machine-readable model or representation of a resource. A logical block can refer to code (e.g., human-readable code, machine-readable code, etc.) that can be written so that the object can monitor a partition, a portion, a slice, etc., of the resource. For example, an object can be implemented using compiled object code, source code, etc., that, when executed, can expose one or more object interfaces to a software stack (e.g., a platform software stack, a system software stack, etc.). In such examples, the TIO 706, when invoked, can provide and/or otherwise expose telemetry data generated by and/or otherwise associated with the object 702. For example, the telemetry data can include a tracking of the execution of one or more processes, services, etc., of the object. An example implementation of a TIO that may be utilized with the methods and apparatus disclosed herein is described in U.S. Patent Application Publication No. 2020/0136994, entitled "Methods And Apparatus To Aggregate Telemetry Data In An Edge Environment." Alternatively, the methods and apparatus for attestation disclosed herein may be utilized with any type of telemetry object or other data object.

The example TIO interface 708 exposes an interface for other objects and systems to interface with, communicate with, etc. the TIO 706. For example, the TIO interface 708 may define and/or otherwise specify one or more commands, instructions, etc., to invoke the object 702 to obtain a value for a performance metric of telemetry data. For example, the TIO interface 708 can include, correspond to, and/or otherwise be representative of one or more network interfaces, one or more web servers, one or more APIs (e.g., a Representational State Transfer (REST) API, a Simple Object Access Protocol (SOAP) API, etc.), etc.

The AIO 710 is an object to provide operations that produce quality and/or integrity metrics for the object 702. The example AIO 710 produces attestation evidence that describes the environment, configuration, and/or operational condition or "state" in which the TIO 706 operates. The AIO 710 may convey evidence to a verifier (e.g., a consumer of telemetry data) where the verifier evaluates the evidence against a policy of known-good or expected "state" that signifies trustworthy operation.

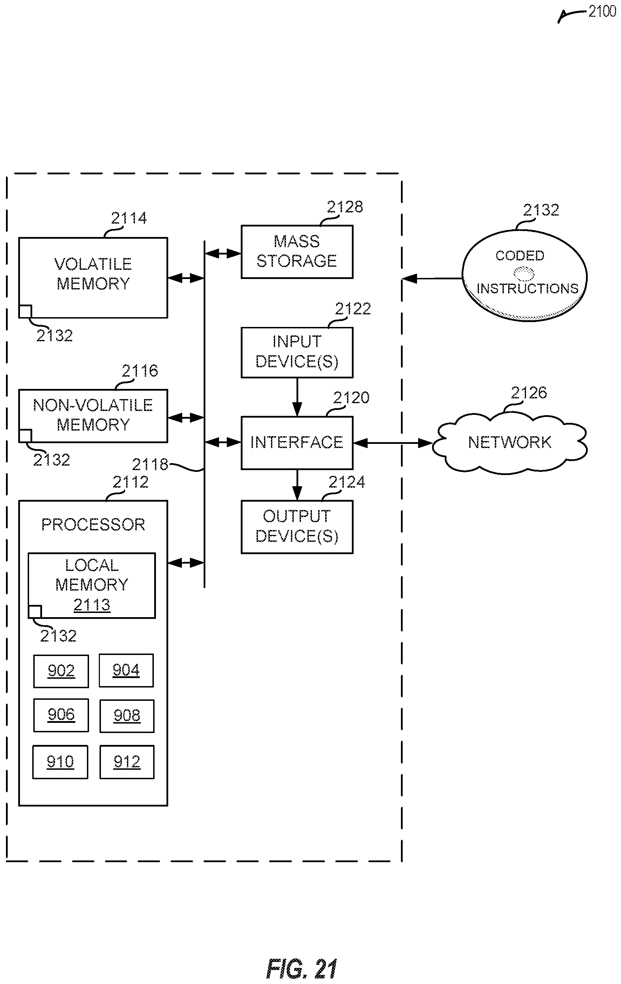

The example AIO 710 includes one or more trusted computing components that are attestable as to identity and context to maintain security credentials utilized for accessing different layers of information for the TIO 706 to ensure protection of those security credentials. The example AIO 710 also provides temporal information that provides indications on the quality of data over time. For example, the temporal information may specify that a particular data object information will be 50% less reliable in 24 hours and should not be trusted (as relevant or trustworthy information) in more than 48 hours. The AIO 710 may be implemented in firmware or software that runs on an execution engine shared by the TIO 706 or may run in an isolated environment such as an ARM TrustZone, an FPGA bitstream partition, a dedicated security controller, a task isolated task of a general purpose microcontroller or microprocessor (e.g., the example processor platform 2100 of FIG. 21), etc.

The example AIO interface 712 exposes an interface for other objects and systems to interface with, communicate with, etc. the AIO 710. For example, the AIO interface 712 may define and/or otherwise specify one or more commands, instructions, etc., to generate and/or obtain attestation information for the object 702 and/or the TIO 706. For example, the AIO interface 712 can include, correspond to, and/or otherwise be representative of one or more network interfaces, one or more web servers, one or more APIs (e.g., a Representational State Transfer (REST) API, a Simple Object Access Protocol (SOAP) API, etc.), etc. While the illustrated example includes a dedicate AIO interface 712, the AIO 710 may additionally or alternatively be exposed for access through the object interface 704 and/or the TIO interface 708. For example, the example the AIO 710 may be exposed through the object interface 704 and/or the TIO interface 708 for context-sensitive exposure of trustworthiness status. Alternatively, the AIO interface 712 may be provided/utilized for fully out-of-band attestation assessments that occur independent of data accesses or telemetry collection. For example, a risk management monitoring system may sample the AIO interface 712 regularly to observe changes in trustworthiness. A device, service or object onboarding task may consult the AIO interface 712 as a prerequisite to pursuing further onboarding actions.

The AIO 710 may be integrated into the data object interface 704 directly by supplying an attestable key that is used with the interface security mechanisms. For example, the object interface 704 may rely on a transport layer security (TLS) protected session such as a constrained application protocol secure (CoAPS) session, a hypertext transport protocol secure (HTTPS) session, or a TLS virtual private network (VPN) session. Alternatively, the object 702 may protect data values end-to-end using object security for constrained RESTful environments (OSCORE), WS-Security, CBOR object signing and encryption (COSE), java object signing and encryption (JOSE), or content management system (CMS) data encodings that support signing and encryption. A verifier may detect the use of an attestable key and query the AIO interface 712 to obtain evidence. Alternatively, evidence may be integrated into a data object protocol directly.

An example Edge ecosystem may consist of edge operations services such as orchestration, telemetry, manageability, scheduling. The Edge ecosystem may include user applications and/or groups of users. The Edge ecosystem may consist of a rich set of interconnected and interrelated services, microservices, FaaS services, edge-lets, data pools, cloudlets etc. that may be arranged in various configurations such that there may be a system of input and output dependency. The AIO 710 may be integrated with each data or services object so that an attestation risk assessment can be applied system wide, to a sub-system, or local to a specific node.

As objects or systems are aggregated or disaggregated into various compositions, their AIO 710 may thus aggregate or disaggregated in a similar manner to permit a separation of attestation concerns between how an object delivers its service, from how that object becomes part of a trusted system. The separation of concerns permits a granular orchestration of security and trust in accordance with security policies and objectives, and thus separate from performance, power, and other objectives that drive resource allocation decisions. Thus, an SSO policy objective may be associated with an entire organization, and once signed in and attested at a level of aggregation, an entire subsystem of objects may be authenticated and trusted to operate as one domain continuum, even though, for performance or quality management purposes, some parts of that continuum may be prioritized or deprioritized for resource allocation.

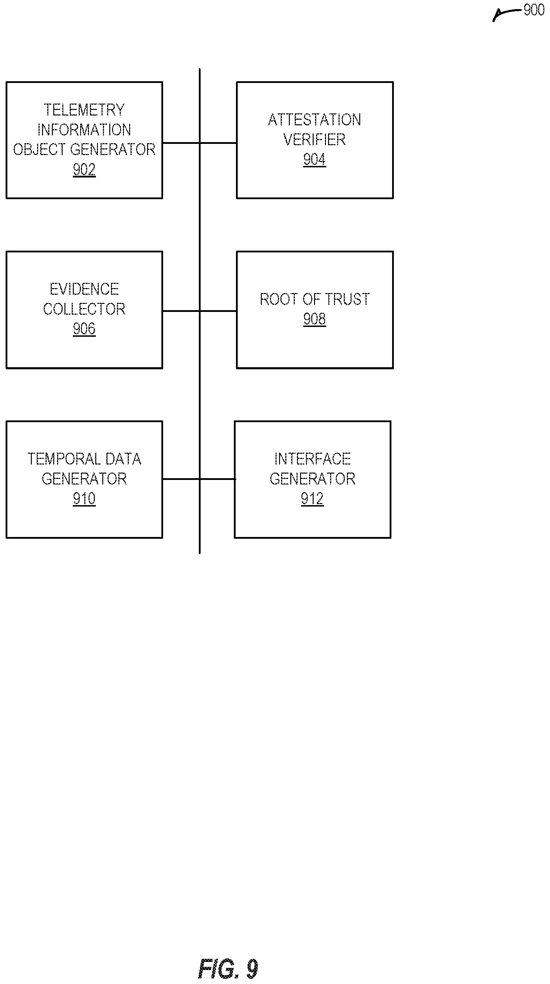

The AIO 710 may be a building block for composing trustworthy telemetry from objects and systems of objects that can scale with small and large numbers of distributed objects and systems to indicate and evaluate the reliability of the levels of such systems. At the same time, since resource allocation and deallocation decisions in an agile edge environment depend critically on telemetry information, and that telemetry too may need to be trusted (at least as not being malicious or mischievous), the AIO 710 associated with an object or subsystem may also protect or attest-to the trustworthiness of such telemetry as shown in FIG. 9. In some examples, the object 702 may be very sensitive (e.g., it may be a key value store that contains personally identifiable information), but the TIO 708 associated with the object 702 may be freely shared within a domain because a knowledge of telemetry does not reveal the contents of the object 702. Accordingly, the attestation via the AIO 710 over the object 702, and over the telemetry data in the TIO 708 associated with that object 702, may be loosely coupled without breaking the expectation that the principle of least privilege is observed.

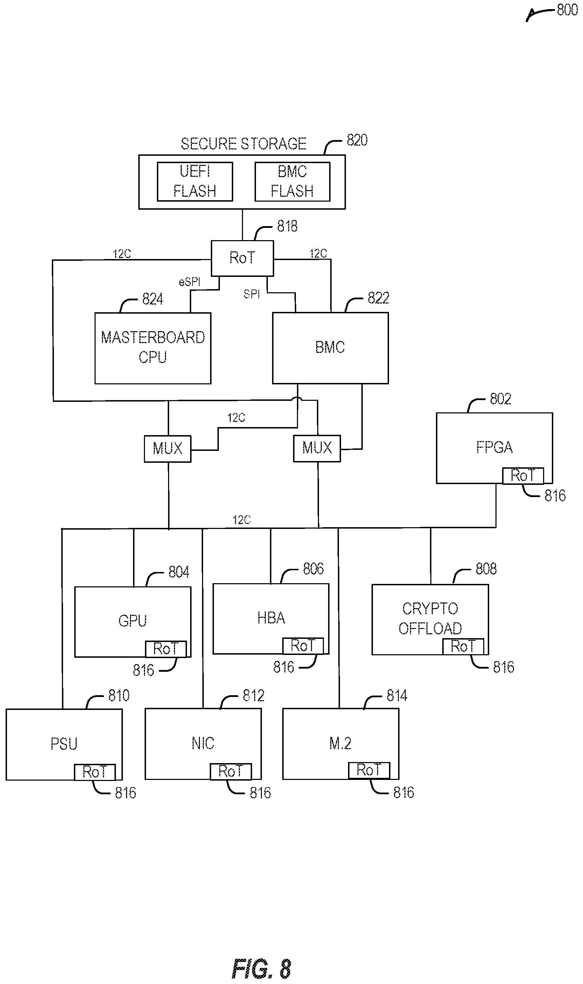

FIG. 8 is a block diagram of an example computing architecture 800 that may employ the TIO and AIO system of FIG. 7. The example computing architecture 800 includes a plurality of components and subsystems including an example FPGA 802, an example GPU 804, an example HBA 806, an example cryptographic offload component 808, an example power supply unit 810, an example network interface card 812, and an example M.2 card 814. The example subsystems each include a component root of trust (RoT) 816 that implements the TIO 706, the TIO interface 708, the AIO 710, and the AIO interface 712.

The example architecture 800 further includes an example physical access root of trust (PaRoT) 818 that may implement the TIO 706, the TIO interface 708, the AIO 710, and the AIO interface 712. The example PaRoT 818 is coupled to an example secure storage 820, an example baseboard management controller 822, and an example motherboard CPU 824.

The architecture 800 illustrates how multiple components of a system may each implement components of telemetry and attestation. The example PaRoT 818 includes the TIO 706 that gathers and reports telemetry of the PaRoT 818. The AIO 710 is an attestation mechanism that reports (attests) the trustworthiness attributes of the TIO 706 that may include the component(s) that implement functionality that is the target of the telemetry collection activity of the TIO 706. In a peer to peer or hierarchical flow of telemetry information among objects and systems, the AIO 710 also attests to telemetry data flowing to/from a peer or up/down through a hierarchy (e.g., data from/to the components 802-814). Thus, the PaRoT 818 can attest the trustworthiness of the entire system using attestation data from the individual RoTs 816.

While FIG. 8 illustrates an aggregated device comprising multiple components, telemetry may be collected from and attested by the AIO 710 in any type of system. For example, telemetry may be collected from a disaggregated computing device (e.g., telemetry may be collected over a compute express link (CXL) interconnect connection, over a CXL ethernet connection, etc.).

FIG. 9 is a block diagram of an example information object generator 900 that may generate the TIO 706, the TIO interface 708, the AIO 710, and the AIO interface 712. The example information object generator 900 may be implemented within the RoT 816 of FIG. 8, within any of the edge nodes describes in FIGS. 1-6, or any other computing device or object. The example information object generator 900 includes an example telemetry information object generator 902, an example attestation verifier 904, an example evidence collector 906, an example root of trust 908, an example temporal data generator 910, and an example interface generator 912.

The example telemetry information object generator 902 generates the TIO 706 and the TIO interface 708. Example details for deploying a TIO and TIO interface are described in U.S. Patent Application Publication No. 2020/0136994, entitled "Methods And Apparatus To Aggregate Telemetry Data In An Edge Environment."

The example attestation verifier 904 performs verification of attestation information (e.g., attestation information from an AIO 710 of another object). For example, the verifier 904 may include a repository of rules, policies, credentials, signatures, certificates, or other data that may be utilized for evaluating the validity, trustworthiness, authenticity, etc. of attestation data. For example, the attestation verifier 904 may evaluate evidence from the AIO 710 against a policy of known-good or expected "state" that signifies trustworthy operation. The verifier 904 may perform such analysis when a device or object is determining whether to rely on, act on, or otherwise utilize data (e.g., telemetry information from the TIO 706).

The example evidence collector 906 collects evidence to be used in attestation for the AIO 710. For example, the evidence collector may access data, attributes, characteristics, parameters, etc. associated with and/or created by an object, system, or subsystem (e.g., data about the device state, device version, software version, identification information, credentials, signatures, certificates, etc.), which evidence may reflect the trustworthiness and/or authenticity of the object and/or data associated with the object (e.g., telemetry information such as information associated with the TIO 706). The particular operations and evidence collected by the evidence collector 906 may depend on the particular object with which the information object generator 900 is associated (e.g., collecting evidence relevant to a storage device vs. collecting evidence relevant to a network interface card).

The root of trust 908 implements a set of functions for trusted computing. The root of trust 908 of the illustrated example is implemented by a trusted computing module (TPM). Alternatively, any other implementation of the root of trust 908 may be utilized. According to the illustrated example, the root of trust 908 implements an attestable cryptographic identity such as a Trusted Computing Group Device Identity Composition Engine (TCG DICE), TPM, Root of trust for Measurement (RTM) such as INTEL TRUSTED EXECUTION TECHNOLOGY (TXT) or any other root of trust technology.

The example temporal data generator 910 generates temporal information and associates the temporal information with the AIO 710. For example, the temporal data generator 910 may associate different subsets of information with different temporal properties. Each temporal property may indicate how a validity of the data ages over time. For example, aging may be defined as: Intervals of time and corresponding validity (e.g., [0-4h] 100% valid, [4-24] 44% valid, [>24 h] 10% valid) or Function of time (e.g., validity of the data may be defined by a logarithmic function of the age of the data set).

The example interface generator 912 to generate, compile, and/or otherwise instantiate an interface (e.g., AIO interface 710, etc.) based on the AIO 710, etc. For example, the interface generator 910 can generate the AIO interface 712 for the AIO 710 corresponding to a storage partition. In such examples, the interface generator 910 can generate the AIO interface 712 based on the storage partition, where the AIO interface 712 is representative of and/or otherwise corresponds to machine readable instructions (e.g., a hardware call, a system call, an API, a hook, etc.) that, when executed, invokes the storage partition to obtain and/or generate evidence associated with attestation associated with the storage partition.

While an example manner of implementing the information object generator 900 is illustrated in FIG. 9, one or more of the elements, processes and/or devices illustrated in FIG. 9 may be combined, divided, re-arranged, omitted, eliminated and/or implemented in any other way. Further, the example telemetry information object generator 902, the example attestation verifier 904, the example evidence collector 906, the example root of trust 908, the example temporal data generator 910, the example interface generator 912 and/or, more generally, the example information object generator 900 of FIG. 9 may be implemented by hardware, software, firmware and/or any combination of hardware, software and/or firmware. Thus, for example, any of the example telemetry information object generator 902, the example attestation verifier 904, the example evidence collector 906, the example root of trust 908, the example temporal data generator 910, the example interface generator 912 and/or, more generally, the example information object generator 900 of FIG. 9 could be implemented by one or more analog or digital circuit(s), logic circuits, programmable processor(s), programmable controller(s), graphics processing unit(s) (GPU(s)), digital signal processor(s) (DSP(s)), application specific integrated circuit(s) (ASIC(s)), programmable logic device(s) (PLD(s)) and/or field programmable logic device(s) (FPLD(s)). When reading any of the apparatus or system claims of this patent to cover a purely software and/or firmware implementation, at least one of the example telemetry information object generator 902, the example attestation verifier 904, the example evidence collector 906, the example root of trust 908, the example temporal data generator 910, and the example interface generator 912 is/are hereby expressly defined to include a non-transitory computer readable storage device or storage disk such as a memory, a digital versatile disk (DVD), a compact disk (CD), a Blu-ray disk, etc. including the software and/or firmware. Further still, the example information object generator 900 may include one or more elements, processes and/or devices in addition to, or instead of, those illustrated in FIG. 9, and/or may include more than one of any or all of the illustrated elements, processes and devices. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

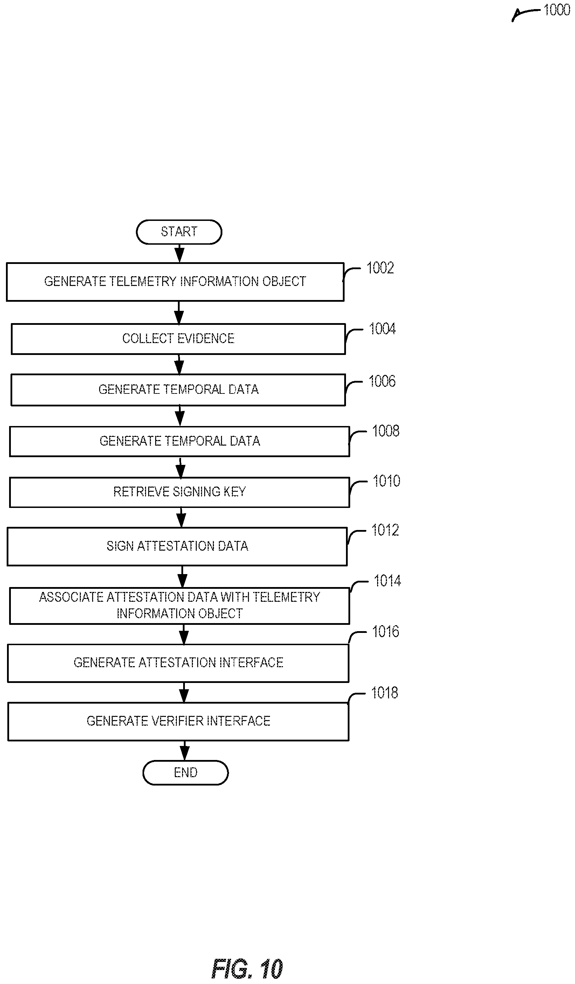

Flowcharts representative of example hardware logic, machine readable instructions, hardware implemented state machines, and/or any combination thereof for implementing the information object generator 900 are shown in FIGS. 10-11. The machine readable instructions may be one or more executable programs or portion(s) of an executable program for execution by a computer processor and/or processor circuitry, such as the example processor platform 2100 shown in FIG. 21. The program may be embodied in software stored on a non-transitory computer readable storage medium such as a CD-ROM, a floppy disk, a hard drive, a DVD, a Blu-ray disk, or a memory associated with the example processor platform 2100, but the entire program and/or parts thereof could alternatively be executed by a device other than the example processor platform 2100and/or embodied in firmware or dedicated hardware. Further, although the example program is described with reference to the flowchart illustrated in FIG. 9, many other methods of implementing the example information object generator 900 may alternatively be used. For example, the order of execution of the blocks may be changed, and/or some of the blocks described may be changed, eliminated, or combined. Additionally or alternatively, any or all of the blocks may be implemented by one or more hardware circuits (e.g., discrete and/or integrated analog and/or digital circuitry, an FPGA, an ASIC, a comparator, an operational-amplifier (op-amp), a logic circuit, etc.) structured to perform the corresponding operation without executing software or firmware. The processor circuitry may be distributed in different network locations and/or local to one or more devices (e.g., a multi-core processor in a single machine, multiple processors distributed across a server rack, etc.).

The machine readable instructions described herein may be stored in one or more of a compressed format, an encrypted format, a fragmented format, a compiled format, an executable format, a packaged format, etc. Machine readable instructions as described herein may be stored as data or a data structure (e.g., portions of instructions, code, representations of code, etc.) that may be utilized to create, manufacture, and/or produce machine executable instructions. For example, the machine readable instructions may be fragmented and stored on one or more storage devices and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc. in order to make them directly readable, interpretable, and/or executable by a computing device and/or other machine. For example, the machine readable instructions may be stored in multiple parts, which are individually compressed, encrypted, and stored on separate computing devices, wherein the parts when decrypted, decompressed, and combined form a set of executable instructions that implement one or more functions that may together form a program such as that described herein.

In another example, the machine readable instructions may be stored in a state in which they may be read by processor circuitry, but require addition of a library (e.g., a dynamic link library (DLL)), a software development kit (SDK), an application programming interface (API), etc. in order to execute the instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable media, as used herein, may include machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example processes of FIGS. 10-11 may be implemented using executable instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc. may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, and (7) A with B and with C. As used herein in the context of describing structures, components, items, objects and/or things, the phrase "at least one of A and B" is intended to refer to implementations including any of (1) at least one A, (2) at least one B, and (3) at least one A and at least one B. Similarly, as used herein in the context of describing structures, components, items, objects and/or things, the phrase "at least one of A or B" is intended to refer to implementations including any of (1) at least one A, (2) at least one B, and (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, and (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, and (3) at least one A and at least one B.

As used herein, singular references (e.g., "a", "an", "first", "second", etc.) do not exclude a plurality. The term "a" or "an" entity, as used herein, refers to one or more of that entity. The terms "a" (or "an"), "one or more", and "at least one" can be used interchangeably herein. Furthermore, although individually listed, a plurality of means, elements or method actions may be implemented by, e.g., a single unit or processor. Additionally, although individual features may be included in different examples or claims, these may possibly be combined, and the inclusion in different examples or claims does not imply that a combination of features is not feasible and/or advantageous.

The program of FIG. 10 begins when the telemetry information object generator 902 generates a TIO and TIO interface (e.g., the TIO 706 and the TIO interface 708) (block 1002). The example evidence collector 906 collects to support attestation of the TIO 706 (block 1006). For example, the evidence collector 906 may retrieve data from an object, component, system, subsystem, etc. associated with the TIO 706 (e.g., the object 702).

The example temporal data generator 910 then generates temporal data for the evidence/data (block 1008). For example, the temporal data may indicate an expiration for the telemetry data of the TIO 706, an evaluation of the reliability of the telemetry information that varies over time, etc.

The example evidence collector 906 retrieves a signing key from the example root of trust 908 (block 1010). For example, the singing key may be stored in a TPM of the root of trust 908. Alternatively, any other type of credential, key, signature, certificate, or other data/attribute may be retrieved for singing the evidence/attestation data. The example evidence collector 906 signs the attestation data using the retrieved key (block 1012). For example, to sign the evidence/data, the evidence collector 906 may generate a hash of the evidence/data and may encrypt that hash with a private key for which the public key is trusted (e.g., validated by a trusted authority). Alternatively, any other type of signing or attestation to the validity of the evidence/data may be utilized.

The example evidence collector 906 associates the signed evidence/attestation data with the TIO 706 (block 1014). The example interface generator 912 then generates the attestation interface (e.g., the AIO interface 712) (block 1016). According to the illustrated example, the example interface generator 912 additionally generates a verifier interface to facilitate interaction with the example attestation verifier 904 (block 1018). While the illustrated example includes generation of the attestation interface 712 and the verifier interface, only one or none of the interfaces may be generated (e.g., the object interface 704 and/or the TIO interface 708 may be the only interfaces).

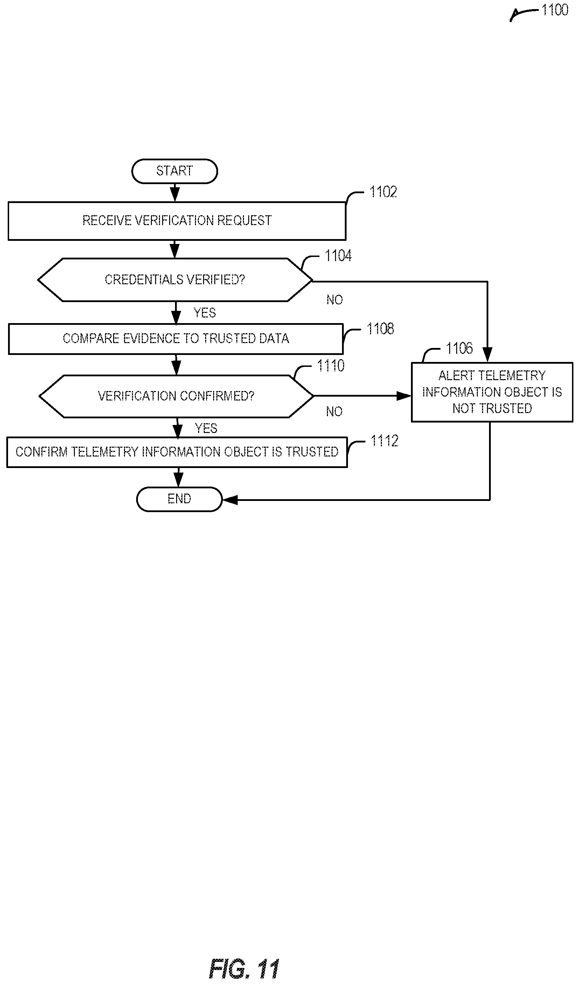

FIG. 11 is a flowchart illustrating an example process to verify attestation data generated by the example information object generator 900. For example, a first component or device implementing the information object generator 900 may provide evidence for attestation to a second component or device. The program 1100 of FIG. 11 begins when the example attestation verifier 904 receives a verification request (block 1102). For example, the request may be received via the AIO interface 712 and/or may be received via another interface (e.g., the object interface 704 or the TIO interface 708). The example request may include a TIO and evidence for to be verified (e.g., credentials, metadata, signatures, device information, software information, etc.). The example attestation verifier 904 determines if credentials provided with the request are verified (block 1104). For example, the credentials may be compared with credentials stored in the root of trust 908, credentials stored at an authoritative server, may be analyzed to determine validity (e.g., by verifying a valid signature or certificate), etc.

If the credentials are not verified, the example attestation verifier 904 sends an alert that the telemetry information object associated with the request is not trusted (block 1106).

If the credentials associated with the request are verified (block 1104), the example attestation verifier 904 compares the provided evidence to trusted data (block 1108). The particular trusted data that indicates that data is authentic is specific to the particular implementation of the AIO 710. For example, the trusted data may indicate valid software versions, valid keys, valid signatures, valid hashes, valid device identities, etc.

If the attestation verifier 904 determines that the verification is not confirmed, the example attestation verifier 904 sends an alert that the telemetry information object associated with the request is not trusted (block 1106). If the attestation verifier 904 determines that the verification is confirmed, the attestation verifier 904 confirms that the TIO is trusted (block 1112). For example, upon determining that the TIO is trusted, the TIO may be acted upon, shared, stored, etc.

An Attestation Architecture showing various roles in an attestation system that involves the creation, processing, evaluation, collection and response actions.

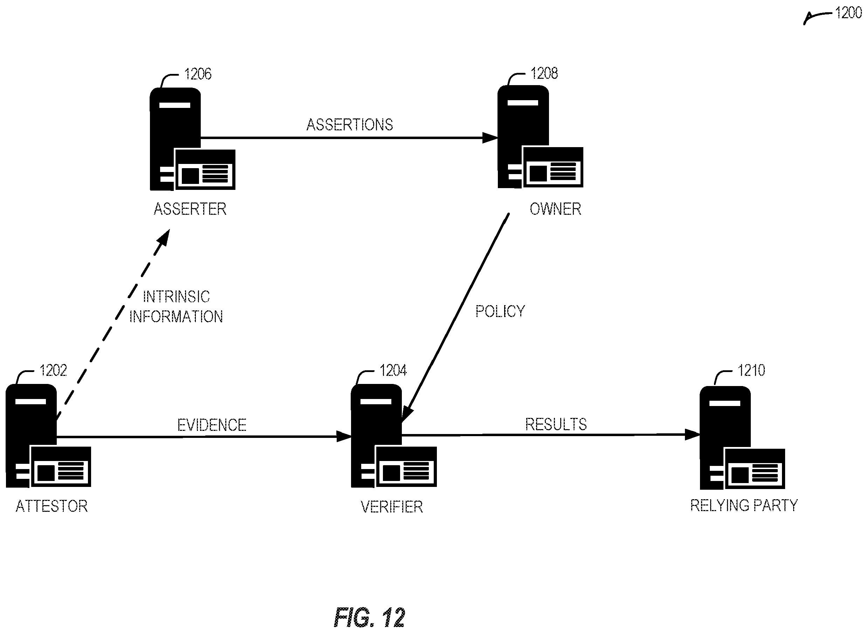

As illustrated in FIG. 12, the TIO 708 may implement one or more attestation roles: an attestator 1202, a verifier 1204, an asserter 1206, an owner 1208, and a relying party 1210. For example, a data object might be seeking access to resources controlled by the relying party 1210 and must supply evidence of trustworthiness to the verifier 1204. The AIO 710 implements the attestator 1202 role to produce the evidence that may be conveyed along with the data object or TIO 708 data set. Alternatively, the verifier 1204 may open a side-band connection to the AIO Interface 710 to perform an assessment of trustworthiness while the data or TIO 708 session is blocked waiting for the attestation assessment to complete.

An AIO 710 may implement the verifier interface that allows the attestation verification function to be exposed as a first-class object or service. Nevertheless, the AIO attester 1202 role can be retained in case an attestation of the verifier 1204 service is subsequently required. Another scenario allows the AIO 710 to implement the relying party 1210 role where the verifier 1204 is contacted to obtain attestation verification results or to obtain an attestation of the verifier 1204 prior to acting on attestation results. In such examples, the AIO 710 may include policies that describe conditions in which to accept the verifier's 1204 attestation evidence. These scenarios can be nested into a cascade of trust evaluations if appropriate. In some examples, applications and/or software stacks may indicate a subset of objects to be validated and/or a subset of objects that are not to be validated. For example, to conserve computing resources, conserve power, etc. only a subset of the computing resources may need to establish trust and be validated.

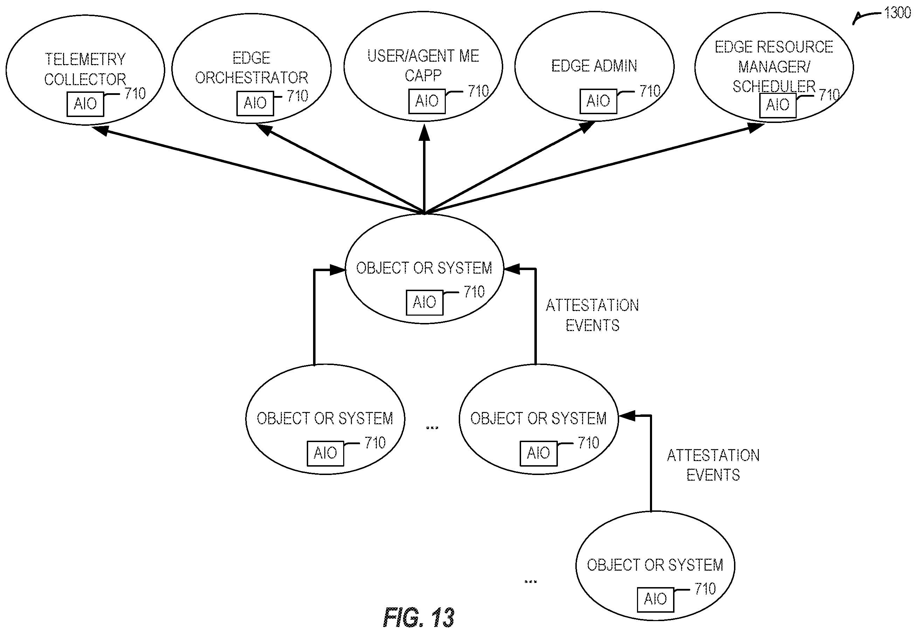

As illustrated in FIG. 13, the functionality of the TIO 708 may be constructed in a cascade according to the structure of an endpoint environment 1300 or according to an Edge network configuration (e.g., the edge network configurations described in conjunction with FIGS. 1-6). The functionality of the AIO 710 may parallel the functionality of the TIO 706 and vice-versa such that the metadata description of the endpoint hierarchy or network topology is the same for the TIO 706 and the AIO 710 subsystems. As illustrated in FIG. 13, attestation events may flow through the logical arrangement of the system.

Attestation credentials may be used to seal (e.g., sign) various object information, access to object operations, telemetry, etc., through well known or standardized interfaces with variable implementations behind them. Similarly, verification of signed credentials may be available through well-known or standard interfaces, with variable implementations behind them. The TIO 708 may utilize deep analytics algorithms to assign weights or AI relevance to the TIO 708 based on accompanying AIO 710 attestations as a strategy for representing improved data quality or believability or as a risk-managed analytics algorithm. In some examples, all objects and object types may be associated with a same authority (e.g., a same certificate authority, a same signature authority, or any other type of certification/authenticating authority). Alternatively, different objects and/or object types may be associated with different authorities. For example, some parts of the CPU may be associated with a first certification authority and another parts of the CPU may be associated with a second certification authority.

While some examples disclosed herein are facilitate attestation for telemetry, the AIO 710 may additionally be utilized in other contexts. Attestation may provide a myriad of benefits as more and more devices with different software and hardware stacks and operators interact. Attestation may provide benefits from being able to ascertain when, where, or how data was collected and stored to verifying the software or hardware integrity of partner platforms. For example, the AIO 710 may be utilized to facilitate security for MEC. For example, an object, device, virtual machine, container, trusted execution environment, etc. can prove it originated from a known manufacturer using provenance attestation. Alternatively, status attestation can prove the platform was correctly onboarded, has the correct identity, is configured correctly, was launched correctly, is owned by the right owner, complies with the right compliance criteria, is in a correct operational state, etc. Trusted computing in an edge environment such as MEC solves problems of lack of physical premises protections, reducing choke points for enforcing security, decentralized security assurances, etc.

Attestation may be utilized in conjunction with service hosting, content delivery, telemetry collection, etc. For example, a service hosting, an attestor (client) transmits a request (e.g., using RESTful architecture) to a verifier (server) along with the AIO 710 that includes attestation data. If the verifier verifies the AIO 710 attestation data, the verifier (server) transmits the data requested by the client. In another example related to content delivery, a verifier (subscriber) sends the AIO 710 to an attester (publisher) along with a subscription request. If the publisher validates the attestation data, the publisher sends the subscribed content to the subscriber. In another example related to telemetry collection, a verifier (console) synchronizes a block with an attester (platform). The attester transmits attested timing tic data as well as telemetry data to the console. If the console validates the attested tics, the console trusts the telemetry data from the platform and may act on the data (e.g., trigger an action, etc.).

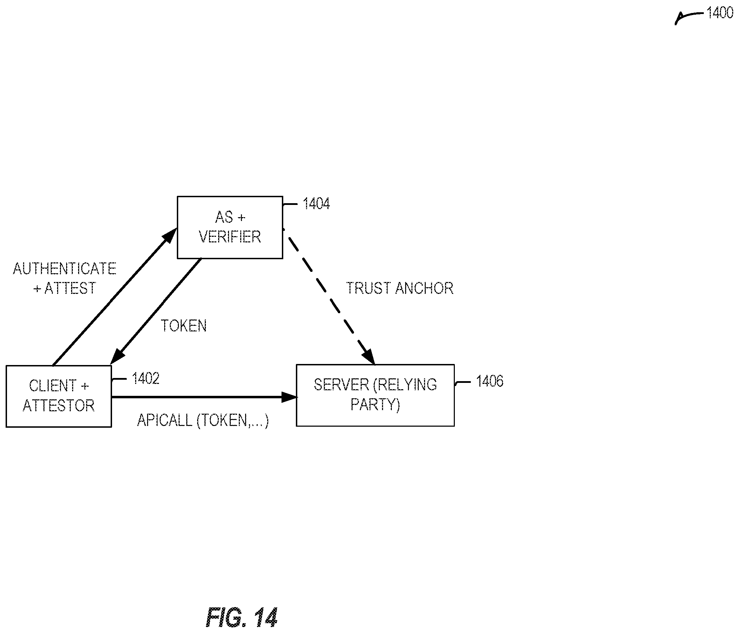

Attestation may be integrated into conveyance protocols as illustrated in FIGS. 14-16.

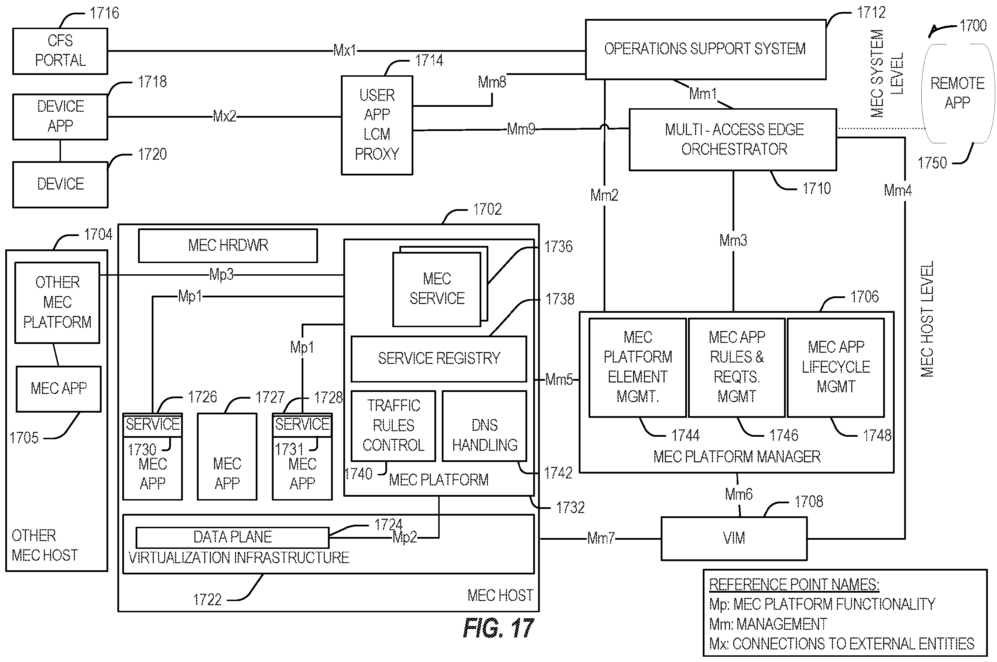

FIG. 14 illustrates an example flow diagram for attestation/authentication (e.g., OAuth2 authentication) in an environment that includes an example client 1402, an example verifier 1404, and an example relying party 1406. For example, the attestation may be performed in a MEC environment such as any of the MEC environments described throughout this specification (e.g., the MEC environments discussed in conjunction with FIGS. 17-18). As illustrated in the flow diagram 1400 of FIG. 14, the server 1406 obtains a trust anchor (e.g., a public key or public key, public key certificate, etc.) from the verifier 1404 (e.g., an authentication services (AS) root CA) . The client/attestator 1402 transmits authentication information along with AIO 710 to an authentication server 1404 implementing the AIO 710 as a verifier. For example, the client 1402 may transmit an authentication challenge (e.g., the client 1402 may sign a none provided by the verifier 1404 or supply a password, supply biometric information, etc.). If the authentication server 1404 validates the attestation data and the credentials, the authentication server 1404 transmits a token to the client 1402. For example, the token may be signed by the verifier 1404, may describe the identity of the client 1402, and may contain a duration in which the login session is active. The token may additionally include information about roles, authorizations, access rights, etc. Thus, when the client 1402 makes an API call along with the token to the server (acting as a relying party), the server 1406 trusts the client 1402 in order to act on the API call. The server 1406 may verify the token received in the API call from the client 1402 by verifying the signature over the token. If path validation resolves to the trust anchor, the server knows that the token was issued by the verifier 1404 and that the client is authentic. Accordingly, the server 1406 will process the API call.

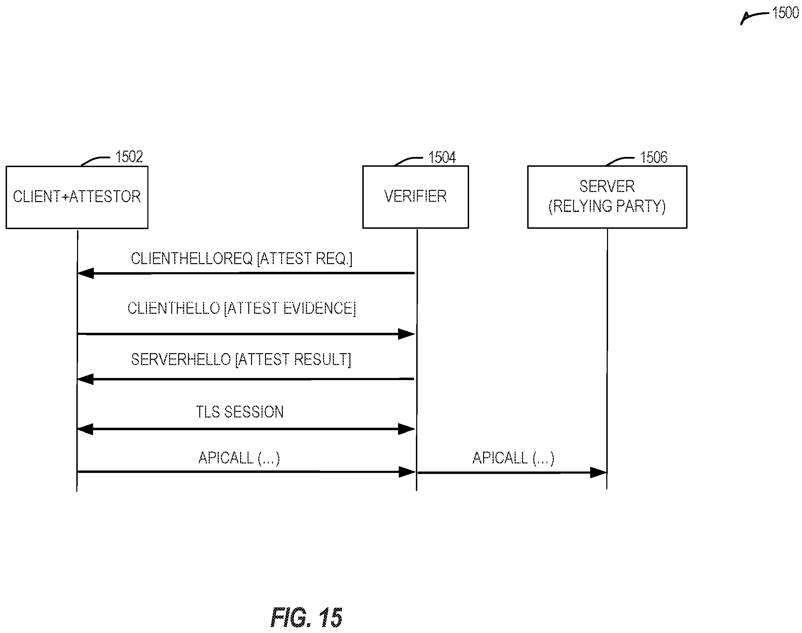

As illustrated in the flow diagram 1500 of FIG. 15, a verifier 1504 transmits a Client Hello request along with a request for attestation data to a client 1502. The client 1502 transmits a Client Hello message along with AIO 710 attestation evidence to the verifier 1504. In response, the verifier 1504 transmits a Server Hello response along with results of verification of the attestation device. A TLS session is then established. As the client 1502 is now validated to the verifier 1504, the client transmits an API call to the verifier 1504 which relays the API call to the server 1506, which is acting as a relying party.

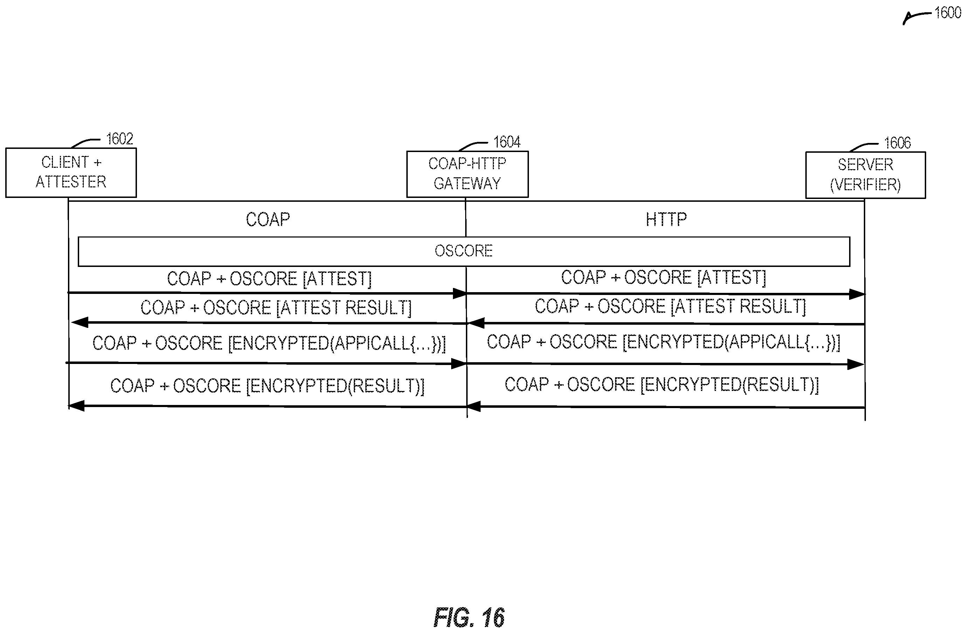

As illustrated in the flow diagram 1600 of FIG. 16, a client 1602 transmits a constrained application protocol (CoAP) and OSCORE request along with attestation data (e.g., the AIO 710) to a CoAP-HTTP gateway 1604, which relays the OSCORE and attestation data to a server 1606 via HTTP. The server 1606 replies to the gateway 1604 with an HTTP and OSCORE response including a result of the verification of the attestation data by the server 1606. The gateway 1604 transmits a CoAP response with OSCORE and the attestation result to the client 1602. Accordingly, the client 1602 is now validated to the server 1606. Accordingly, the client 1602 may subsequently transmits a CoAP + OSCORE request with an encrypted API call to the gateway 1604, which relays the encrypted API call tot eh server 1606 via HTTP + OSCORE. In response, the server 1606 transmits an encrypted result of the API call to the gateway 1604 via HTTP + OSCORE. The gateway 1604 transmits the encrypted result to the client 1602 via CoAP + OSCORE.

FIG. 17 illustrates a mobile edge system reference architecture (or MEC architecture) 1700, such as is indicated by ETSI MEC specifications. FIG. 17 specifically illustrates a MEC architecture 1700 with MEC hosts 1702 and 1704 providing functionalities in accordance with the ETSI GS MEC-003 specification. In some aspects, enhancements to the MEC platform 1732 and the MEC platform manager 1706 may be used for providing specific computing functions within the MEC architecture 1700. The attestation described throughout this specification may be implemented within the example MEC architecture illustrated in FIG. 17.

Referring to FIG. 17, the MEC network architecture 1700 can include MEC hosts 1702 and 1704, a virtualization infrastructure manager (VIM) 1708, an MEC platform manager 1706, an MEC orchestrator 1710, an operations support system 1712, a user app proxy 1714, a UE app 1718 running on UE 1720, and CFS portal 1716. The MEC host 1702 can include a MEC platform 1732 with filtering rules control component 1740, a DNS handling component 1742, a service registry 1738, and MEC services 1736. The MEC services 1736 can include at least one scheduler, which can be used to select resources for instantiating MEC apps (or NFVs) 1726, 1727, and 1728 upon virtualization infrastructure 1722. According to the illustrated example, the MEC services 1736 include a service that includes an Attestation Verifier (e.g., as described in conjunction with FIGS. 9, 14, etc.) that performs attestation evidence appraisal and then issues a token (e.g., as illustrated by the flow diagram of FIG. 14). However, instead of the token indicating who is logged into the network, the token indicates which device has been verified (e.g., vetted with a minimum level of device hardening and key protection). The example attestation token may accompany a MEC API call (e.g., the API call from the client 1402 to the server 1406 of FIG. 14) as a condition of a MEC Server or a MEC App (e.g., the MEC app 1726) processing the next command (e.g., the next RESTful command). In some examples, a second token could be issued for authentication status or the token may include both authentication and attestation status

The MEC apps 1726 and 1728 can be configured to provide services 1730 and 1731, which can include processing network communications traffic of different types associated with one or more wireless connections (e.g., connections to one or more RAN or telecom-core network entities). The MEC app 1705 instantiated within MEC host 1704 can be similar to the MEC apps 1726-7728 instantiated within MEC host 1702. The virtualization infrastructure 1722 includes a data plane 1724 coupled to the MEC platform via an MP2 interface. Additional interfaces between various network entities of the MEC architecture 1700 are illustrated in FIG. 17.

The MEC platform manager 1706 can include MEC platform element management component 1744, MEC app rules and requirements management component 1746, and MEC app lifecycle management component 1748. The various entities within the MEC architecture 1700 can perform functionalities as disclosed by the ETSI GS MEC-003 specification.

In some aspects, the remote application (or app) 1750 is configured to communicate with the MEC host 1702 (e.g., with the MEC apps 1726-7728) via the MEC orchestrator 1710 and the MEC platform manager 1706.

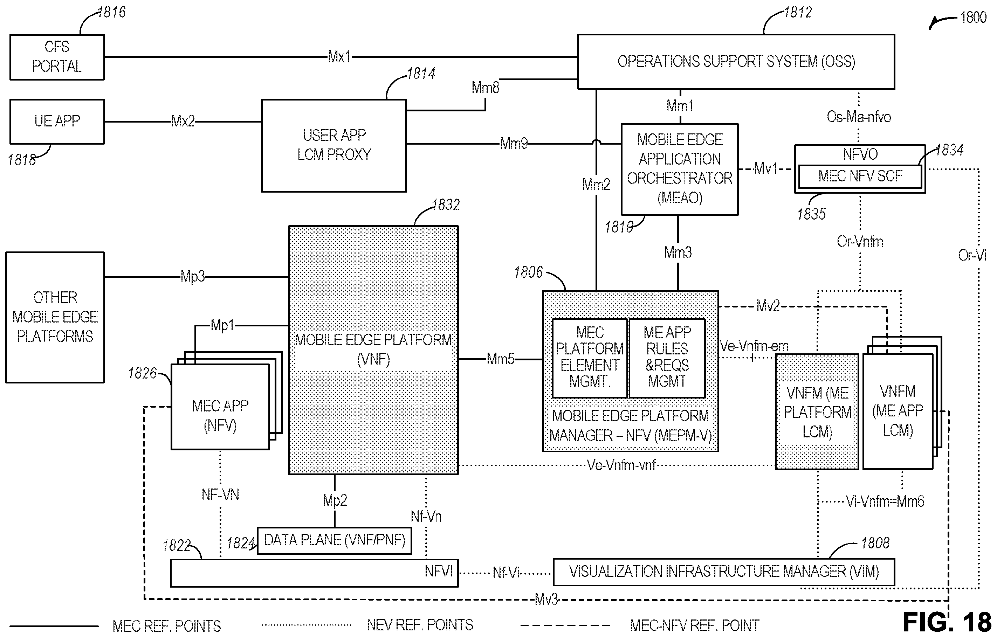

FIG. 18 illustrates a MEC reference architecture 1800 in a Network Function Virtualization (NFV) environment, according to an example. The MEC architecture 1800 can be configured to provide functionalities per the ETSI GR MEC-017 specification.

In some aspects, ETSI MEC can be deployed in an NFV environment as illustrated in FIG. 18. In some aspects, the MEC platform is deployed as a virtualized network function (VNF). The MEC applications can appear like VNFs towards the ETSI NFV Management and Orchestration (MANO) components (e.g., VIM 1808, MEAO 1810 and NFVO 1835). This allows the re-use of ETSI NFV MANO functionality. In some aspects, the full set of MANO functionality may be unused and certain additional functionality may be needed. Such a specific MEC application is denoted by the name "MEC app VNF" (or ME app VNF) as discussed herein. In some aspects, the virtualization infrastructure is deployed as an NFVI and its virtualized resources are managed by the virtualized infrastructure manager (VIM). For that purpose, one or more of the procedures defined by ETSI NFV Infrastructure specifications, i.e. ETSI GS NFV-INF 003, ETSI GS NFV-INF 004, and ETSI GS NFV-INF 005 can be used.

In some aspects, the MEC application (or app) VNFs will be managed like individual VNFs, allowing that a MEC-in-NFV deployment can delegate certain orchestration and Life Cycle Management (LCM) tasks to the NFVO and VNFM functional blocks, as defined by ETSI NFV MANO.

In some aspects, the Mobile Edge Platform Manager (MEPM) 1806 can be transformed into a "Mobile Edge Platform Manager - NFV" (MEPM-V) that delegates the LCM part to one or more virtual network function manager(s) (VNFM(s)). The Mobile Edge Orchestrator (MEO), as defined in the MEC reference architecture ETSI GS MEC-003, can be transformed into a "Mobile Edge Application Orchestrator" (MEAO) 1810 that uses the NFVO 1835 for resource orchestration, and orchestration of the set of MEC app VNFs as one or more NFV Network Services (NSs).

In some aspects, the Mobile Edge Platform VNF, the MEPM-V, and the VNFM (ME platform LCM) can be deployed as a single package as per the ensemble concept in 3GPP TR 32.842, or that the VNFM is a Generic VNFM as per ETSI GS NFV-IFA 009 and the Mobile Edge Platform VNF and the MEPM-V are provided by a single vendor.

In some aspects, the Mp1 reference point between an MEC application and the ME platform can be optional for the MEC application, unless it is an application that provides and/or consumes a ME service. Various MEC-related interfaces and reference points discussed herein are further defined in the following ETSI-related technical specifications: ETSI GS MEC-003 and ETSI GR MEC-024 specifications.

The Mp1 reference point is a reference point between the mobile edge platform and the mobile edge applications. The Mp1 reference point provides service registration, service discovery, and communication support for services. It also provides other functionality such as application availability, session state relocation support procedures, traffic rules and DNS rules activation, access to persistent storage and time of day information, etc. This reference point can be used for consuming and providing service specific functionality.

The Mp2 reference point is a reference point between the mobile edge platform and the data plane of the virtualization infrastructure. The Mp2 reference point is used to instruct the data plane on how to route traffic among applications, networks, services, etc.

The Mp3 reference point is a reference point between mobile edge platforms and it is used for control communication between mobile edge platforms.

In some aspects, the Mm3* reference point between the MEAO 1810 and the MEPM-V 1806 is based on the Mm3 reference point, as defined by ETSI GS MEC-003. Changes may be configured to this reference point to cater to the split between MEPM-V and VNFM (MEC applications LCM).

In some aspects, the following new reference points (Mv1, Mv2, and Mv3) are introduced between elements of the ETSI MEC architecture and the ETSI NFV architecture to support the management of MEC app VNFs. The following reference points are related to existing NFV reference points, but only a subset of the functionality may be used for ETSI MEC, and extensions may be necessary: Mv1 (this reference point connects the MEAO and the NFVO; it is related to the Os-Ma-nfvo reference point, as defined in ETSI NFV); Mv2 (this reference point connects the VNF Manager that performs the LCM of the MEC app VNFs with the MEPM-V to allow LCM related notifications to be exchanged between these entities; it is related to the Ve-Vnfm-em reference point as defined in ETSI NFV, but may include additions, and might not use all functionality offered by Ve-Vnfm-em); Mv3 (this reference point connects the VNF Manager with the MEC app VNF instance, to allow the exchange of messages e.g. related to MEC application LCM or initial deployment-specific configuration; it is related to the Ve-Vnfm-vnf reference point, as defined in ETSI NFV, but may include additions, and might not use all functionality offered by Ve-Vnfm-vnf.

In some aspects, the following reference points are used as they are defined by ETSI NFV: Nf-Vn (this reference point connects each MEC app VNF with the NFVI); Nf-Vi (this reference point connects the NFVI and the VIM); Os-Ma-nfvo (this reference point connects the OSS and the NFVO. It is primarily used to manage NSs, i.e. several VNFs connected and orchestrated to deliver a service); Or-Vnfm (this reference point connects the NFVO and the VNFM; it is primarily used for the NFVO to invoke VNF LCM operations); Vi-Vnfm (this reference point connects the VIM and the VNFM; it is primarily used by the VNFM to invoke resource management operations to manage the cloud resources that are needed by the VNF; it is assumed in an NFV-based MEC deployment that this reference point corresponds 1:1 to Mm6); and Or-Vi (this reference point connects the NFVO and the VIM; it is primarily used by the NFVO to manage cloud resources capacity).

The MEC reference architecture 1800 of FIG. 18 may include a security operational layering that starts with a base of a hardware roots-of-trust (e.g., a Device Identifier Composition Engine (DICE)), followed by execution environments (e.g., virtual machines, containers, etc.), followed by transport layer security (TLS), followed by a transport layer (e.g., HTTP), following by a security context layer (e.g., OAuth2 Token), following by a messaging layer (e.g., Mx, Mm, Mp messages of the MEC architecture 1800). The multiple layers may be integrated into multiple Intellectual Property blocks in a processor platform (e.g., S3M - Secure System Startup Manager IP block, Platform Firmware Resilience (PFR) IP block, Enhanced Security Engine (ESE), Quick Assist Technology (QAT), FPGA, Memory Controller, GPU GuC/HuC, GPU Security Engine, SSD, BMC, etc.). MEC interfaces are built on top of the layering. However, in some examples, a key purpose for attestation in MEC is to expose the Root-of-Trust and other layers so that the MEC services and apps will be able to assess the risk associated with Edge compute interactions (e.g., interactions with a client such as the client 1402). In some examples, attestation also exposes technology unique to a hardware manufacture into the MEC layer so that Edge Policies can be used to show a preference for hardware, firmware, and other lower layers associated with the hardware manufacturer that are differentiated in terms of security or other features that may relate to MEC such as performance optimization, location, time sources, network access interfaces, and related KPIs etc.

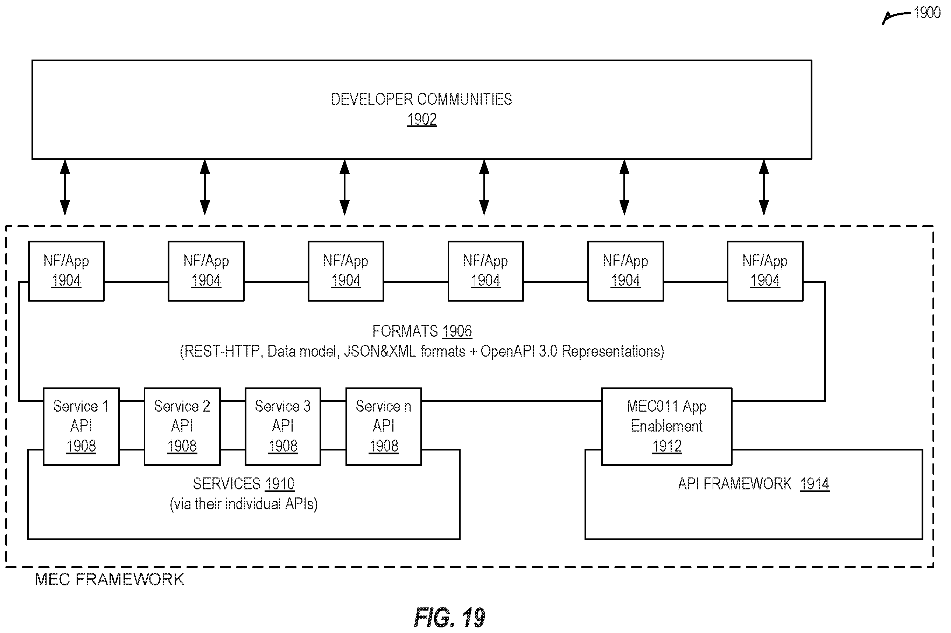

FIG. 19 is a logical diagram illustrating protocols utilized for attestation within a MEC environment. The example system 1900 of FIG. 19 includes developers 1902 that interact with various network functions or applications 1904, which utilize protocols 1906 to communicate with 1) service APIs 1908 to access example services 1910 and 2) application enablement 1912 (e.g., application enablement in accordance with ETSI MEC 011) to access an example API framework 1914. In some examples, the APIs 1908 function in accordance with ETSI MEC 009). The interface formats 1906 of the illustrated example are RESTful and may utilize known formats such as REST-HTTP, data model, JSON and XML formats + OpenAPI 3.0, etc.). According to the illustrated example, messages passed within the illustrated example (e.g., a MEC environment such as the MEC architectures 1700 or 1800) are passed or not passed based on an attestation context and policies for acceptable levels of compliance for how root-of-trust and other layers are implemented and protected.

FIG. 20A is a block diagram of an example implementation of an example edge compute node (e.g., a compute) 2000 that includes a compute engine (also referred to herein as "compute circuitry") 2000 , an input/output (I/O) subsystem 2008, illustrative data storage devices 2010, a communication circuitry 2012, and, optionally, one or more such peripheral devices 2014. In other examples, respective compute devices may include other or additional components, such as those typically found in a computer (e.g., a display, peripheral devices, etc.). Additionally, in some examples, one or more of the illustrative components may be incorporated in, or otherwise form a portion of, another component. The example edge compute node 2000 of FIG.20 may be deployed in one of the edge computing systems illustrated in FIGS. 1-4, 6-8 and/or 9 to implement any edge compute node shown in examples disclosed herein.

The compute node 2000 may be embodied as any type of engine, device, or collection of devices capable of performing various compute functions. In some examples, the compute node 2000 may be embodied as a single device such as an integrated circuit, an embedded system, a field-programmable gate array (FPGA), a system-on-a-chip (SOC), or other integrated system or device. In the illustrative example, the compute node 2000 includes or is embodied as a processor 2004 and a memory 2006. The processor 2004 may be embodied as any type of processor capable of performing the functions described herein (e.g., executing an application). For example, the processor 2004 may be embodied as a multi-core processor(s), a microcontroller, a processing unit, a specialized or special purpose processing unit, or other processor or processing/controlling circuit.

In some examples, the processor 2004 may be embodied as, include, or be coupled to an FPGA, an application specific integrated circuit (ASIC), reconfigurable hardware or hardware circuitry, or other specialized hardware to facilitate performance of the functions described herein. Also, in some examples, the processor 2004 may be embodied as a specialized x-processing unit (xPU) also known as a data processing unit (DPU), infrastructure processing unit (IPU), or network processing unit (NPU). Such an xPU may be embodied as a standalone circuit or circuit package, integrated within an SOC, or integrated with networking circuitry (e.g., in a SmartNIC), acceleration circuitry, storage devices, or AI hardware (e.g., GPUs or programmed FPGAs). Such an xPU may be designed to receive programming to process one or more data streams and perform specific tasks and actions for the data streams (such as hosting microservices, performing service management or orchestration, organizing or managing server or data center hardware, managing service meshes, or collecting and distributing telemetry data), outside of the CPU or general purpose processing hardware. However, it will be understood that a xPU, a SOC, a CPU, and other variations of the processor 2004 may work in coordination with each other to execute many types of operations and instructions within and on behalf of the compute node 2000.

The memory 2006 may be embodied as any type of volatile (e.g., dynamic random access memory (DRAM), etc.) or non-volatile memory or data storage capable of performing the functions described herein. Volatile memory may be a storage medium that requires power to maintain the state of data stored by the medium. Non-limiting examples of volatile memory may include various types of random access memory (RAM), such as DRAM or static random access memory (SRAM). One particular type of DRAM that may be used in a memory module is synchronous dynamic random access memory (SDRAM).

In an example, the memory device is a block addressable memory device, such as those based on NAND or NOR technologies. A memory device may also include a three dimensional crosspoint memory device (e.g., Intel^{®} 3D XPoint^{™} memory), or other byte addressable write-in-place nonvolatile memory devices. The memory device may refer to the die itself and/or to a packaged memory product. In some examples, 3D crosspoint memory (e.g., Intel^{®} 3D XPoint^{™} memory) may comprise a transistor-less stackable cross point architecture in which memory cells sit at the intersection of word lines and bit lines and are individually addressable and in which bit storage is based on a change in bulk resistance. In some examples, all or a portion of the memory 2006 may be integrated into the processor 2004. The memory 2006 may store various software and data used during operation such as one or more applications, data operated on by the application(s), libraries, and drivers.

The compute circuitry 2002 is communicatively coupled to other components of the compute node 2000 via the I/O subsystem 2008, which may be embodied as circuitry and/or components to facilitate input/output operations with the compute circuitry 2002 (e.g., with the processor 2004 and/or the main memory 2006) and other components of the compute circuitry 2002. For example, the I/O subsystem 2008 may be embodied as, or otherwise include, memory controller hubs, input/output control hubs, integrated sensor hubs, firmware devices, communication links (e.g., point-to-point links, bus links, wires, cables, light guides, printed circuit board traces, etc.), and/or other components and subsystems to facilitate the input/output operations. In some examples, the I/O subsystem 2008 may form a portion of a system-on-a-chip (SoC) and be incorporated, along with one or more of the processor 2004, the memory 2006, and other components of the compute circuitry 2002, into the compute circuitry 2002.

The one or more data storage 2010 may be embodied as any type of devices configured for short-term or long-term storage of data such as, for example, memory devices and circuits, memory cards, hard disk drives, solid-state drives, or other data storage devices. Individual data storage devices 2010 may include a system partition that stores data and firmware code for the data storage device 2010. Individual data storage devices 2010 may also include one or more operating system partitions that store data files and executables for operating systems depending on, for example, the type of compute node 2000.

The communication circuitry subsystem 2012 may be embodied as any communication circuit, device, or collection thereof, capable of enabling communications over a network between the compute circuitry 2002 and another compute device (e.g., an edge gateway of an implementing edge computing system). The communication circuitry subsystem 2012 may be configured to use any one or more communication technology (e.g., wired or wireless communications) and associated protocols (e.g., a cellular networking protocol such a 3GPP 4G or 5G standard, a wireless local area network protocol such as IEEE 802.11/Wi-Fi^{®}, a wireless wide area network protocol, Ethernet, Bluetooth^{®}, Bluetooth Low Energy, a IoT protocol such as IEEE 802.15.4 or ZigBee^{®}, low-power wide-area network (LPWAN) or low-power wide-area (LPWA) protocols, etc.) to effect such communication.

The illustrative communication circuitry 2012 includes a network interface controller (NIC) 2020, which may also be referred to as a host fabric interface (HFI). The NIC 2020 may be embodied as one or more add-in-boards, daughter cards, network interface cards, controller chips, chipsets, or other devices that may be used by the compute node 2000 to connect with another compute device (e.g., an edge gateway node). In some examples, the NIC 2020 may be embodied as part of a system-on-a-chip (SoC) that includes one or more processors, or included on a multichip package that also contains one or more processors. In some examples, the NIC 2020 may include a local processor (not shown) and/or a local memory (not shown) that are both local to the NIC 2020. In such examples, the local processor of the NIC 2020 may be capable of performing one or more of the functions of the compute circuitry 2002 described herein. Additionally, or alternatively, in such examples, the local memory of the NIC 2020 may be integrated into one or more components of the client compute node at the board level, socket level, chip level, and/or other levels.

Additionally, in some examples, a respective compute node 2000 may include one or more such peripheral devices 2014. Peripheral devices 2014 may include any type of peripheral device found in a compute device or server such as audio input devices, a display, other input/output devices, interface devices, and/or other peripheral devices, depending on the particular type of the compute node 2000. In further examples, the compute node 2000 may be embodied by a respective edge compute node (whether a client, gateway, or aggregation node) in an edge computing system or like forms of appliances, computers, subsystems, circuitry, or other components.

In a more detailed example, FIG. 20B illustrates a block diagram of an example may edge computing node 2050 structured to implement the techniques (e.g., operations, processes, methods, and methodologies) described herein. This edge computing node 2050 provides a closer view of the respective components of node 2000 when implemented as or as part of a computing device (e.g., as a mobile device, a base station, server, gateway, etc.). The edge computing node 2050 may include any combinations of the hardware or logical components referenced herein, and it may include or couple with any device usable with an edge communication network or a combination of such networks. The components may be implemented as integrated circuits (ICs), portions thereof, discrete electronic devices, or other modules, instruction sets, programmable logic or algorithms, hardware, hardware accelerators, software, firmware, or a combination thereof adapted in the edge computing node 2050, or as components otherwise incorporated within a chassis of a larger system. For example, the edge computing node 2050 can be, for example, a server, a personal computer, a workstation, a self-learning machine (e.g., a neural network), a mobile device (e.g., a cell phone, a smart phone, a tablet such as an iPadTM), a personal digital assistant (PDA), an Internet appliance, a DVD player, a CD player, a digital video recorder, a Blu-ray player, a gaming console, a personal video recorder, a set top box, a headset or other wearable device, an Internet of Things (IoT) device, or any other type of computing device.

The device 2050 may include processing circuitry in the form of a processor 2052, which may be a microprocessor, a multi-core processor, a multithreaded processor, an ultra-low voltage processor, an embedded processor, an xPU/DPU/IPU/NPU, special purpose processing unit, specialized processing unit, or other known processing elements. The processor 2052 may be a part of a system on a chip (SoC) in which the processor 2052 and other components are formed into a single integrated circuit, or a single package, such as the Edison^{™} or Galileo^{™} SoC boards from Intel Corporation, Santa Clara, California. As an example, the processor 2052 may include an Intel^{®} Architecture Core^{™} based CPU processor, such as a Quark^{™}, an Atom^{™}, an i3, an i5, an i7, an i9, or an MCU-class processor, or another such processor available from Intel^{®}. However, any number other processors may be used, such as available from Advanced Micro Devices, Inc. (AMD^{®}) of Sunnyvale, California, a MIPS^{®}-based design from MIPS Technologies, Inc. of Sunnyvale, California, an ARM^{®}-based design licensed from ARM Holdings, Ltd. or a customer thereof, or their licensees or adopters. The processors may include units such as an A5-A13 processor from Apple^{®} Inc., a Snapdragon^{™} processor from Qualcomm^{®} Technologies, Inc., or an OMAP^{™} processor from Texas Instruments, Inc. The processor 2052 and accompanying circuitry may be provided in a single socket form factor, multiple socket form factor, or a variety of other formats, including in limited hardware configurations or configurations that include fewer than all elements shown in FIG. 20B.

The processor 2052 may communicate with a system memory 2054 over an interconnect 2056 (e.g., a bus). Any number of memory devices may be used to provide for a given amount of system memory. As examples, the memory 2054 may be random access memory (RAM) in accordance with a Joint Electron Devices Engineering Council (JEDEC) design such as the DDR or mobile DDR standards (e.g., LPDDR, LPDDR2, LPDDR3, or LPDDR4). In particular examples, a memory component may comply with a DRAM standard promulgated by JEDEC, such as JESD79F for DDR SDRAM, JESD79-2F for DDR2 SDRAM, JESD79-3F for DDR3 SDRAM, JESD79-4A for DDR4 SDRAM, JESD209 for Low Power DDR (LPDDR), JESD209-2 for LPDDR2, JESD209-3 for LPDDR3, and JESD209-4 for LPDDR4. Such standards (and similar standards) may be referred to as DDR-based standards and communication interfaces of the storage devices that implement such standards may be referred to as DDR-based interfaces. In various implementations, the individual memory devices may be of any number of different package types such as single die package (SDP), dual die package (DDP) or quad die package (Q17P). These devices, in some examples, may be directly soldered onto a motherboard to provide a lower profile solution, while in other examples the devices are configured as one or more memory modules that in turn couple to the motherboard by a given connector. Any number of other memory implementations may be used, such as other types of memory modules, e.g., dual inline memory modules (DIMMs) of different varieties including but not limited to microDIMMs or MiniDIMMs.

To provide for persistent storage of information such as data, applications, operating systems and so forth, a storage 2058 may also couple to the processor 2052 via the interconnect 2056. In an example, the storage 2058 may be implemented via a solid-state disk (SSD) drive (SSDD). Other devices that may be used for the storage 2058 include flash memory cards, such as Secure Digital (SD) cards, microSD cards, eXtreme Digital (XD) picture cards, and the like, and Universal Serial Bus (USB) flash drives. In an example, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magnetoresistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory.

In low power implementations, the storage 2058 may be on-die memory or registers associated with the processor 2052. However, in some examples, the storage 2058 may be implemented using a micro hard disk drive (HDD). Further, any number of new technologies may be used for the storage 2058 in addition to, or instead of, the technologies described, such resistance change memories, phase change memories, holographic memories, or chemical memories, among others.

The components may communicate over the interconnect 2056. The interconnect 2056 may include any number of technologies, including industry standard architecture (ISA), extended ISA (EISA), peripheral component interconnect (PCI), peripheral component interconnect extended (PCIx), PCI express (PCIe), or any number of other technologies. The interconnect 2056 may be a proprietary bus, for example, used in an SoC based system. Other bus systems may be included, such as an Inter-Integrated Circuit (I2C) interface, a Serial Peripheral Interface (SPI) interface, point to point interfaces, and a power bus, among others.

The interconnect 2056 may couple the processor 2052 to a transceiver 2066, for communications with the connected edge devices 2062. The transceiver 2066 may use any number of frequencies and protocols, such as 2.4 Gigahertz (GHz) transmissions under the IEEE 802.15.4 standard, using the Bluetooth^{®} low energy (BLE) standard, as defined by the Bluetooth^{®} Special Interest Group, or the ZigBee^{®} standard, among others. Any number of radios, configured for a particular wireless communication protocol, may be used for the connections to the connected edge devices 2062. For example, a wireless local area network (WLAN) unit may be used to implement Wi-Fi^{®} communications in accordance with the Institute of Electrical and Electronics Engineers (IEEE) 802.11 standard. In addition, wireless wide area communications, e.g., according to a cellular or other wireless wide area protocol, may occur via a wireless wide area network (WWAN) unit.

The wireless network transceiver 2066 (or multiple transceivers) may communicate using multiple standards or radios for communications at a different range. For example, the edge computing node 2050 may communicate with close devices, e.g., within about 10 meters, using a local transceiver based on Bluetooth Low Energy (BLE), or another low power radio, to save power. More distant connected edge devices 2062, e.g., within about 50 meters, may be reached over ZigBee^{®} or other intermediate power radios. Both communications techniques may take place over a single radio at different power levels or may take place over separate transceivers, for example, a local transceiver using BLE and a separate mesh transceiver using ZigBee^{®}.

A wireless network transceiver 2066 (e.g., a radio transceiver) may be included to communicate with devices or services in the edge cloud 2095 via local or wide area network protocols. The wireless network transceiver 2066 may be a low-power wide-area (LPWA) transceiver that follows the IEEE 802.15.4, or IEEE 802.15.4g standards, among others. The edge computing node 2050 may communicate over a wide area using LoRaWAN^{™} (Long Range Wide Area Network) developed by Semtech and the LoRa Alliance. The techniques described herein are not limited to these technologies but may be used with any number of other cloud transceivers that implement long range, low bandwidth communications, such as Sigfox, and other technologies. Further, other communications techniques, such as time-slotted channel hopping, described in the IEEE 802.15.4e specification may be used.

Any number of other radio communications and protocols may be used in addition to the systems mentioned for the wireless network transceiver 2066, as described herein. For example, the transceiver 2066 may include a cellular transceiver that uses spread spectrum (SPA/SAS) communications for implementing high-speed communications. Further, any number of other protocols may be used, such as Wi-Fi^{®} networks for medium speed communications and provision of network communications. The transceiver 2066 may include radios that are compatible with any number of 3GPP (Third Generation Partnership Project) specifications, such as Long Term Evolution (LTE) and 5th Generation (5G) communication systems, discussed in further detail at the end of the present disclosure. A network interface controller (NIC) 2068 may be included to provide a wired communication to nodes of the edge cloud 2095 or to other devices, such as the connected edge devices 2062 (e.g., operating in a mesh). The wired communication may provide an Ethernet connection or may be based on other types of networks, such as Controller Area Network (CAN), Local Interconnect Network (LIN), DeviceNet, ControlNet, Data Highway+, PROFIBUS, or PROFINET, among many others. An network interface controller NIC 2068 may be included to enable connecting to a second network, for example, a components 2068 providing communications to the cloud over Ethernet, and a first NIC 2068 providing communications to other devices over another type of network.

Given the variety of types of applicable communications from the device to another component or network, applicable communications circuitry used by the device may include or be embodied by any one or more of components 2064, 2066, 2068, or 2070. Accordingly, in various examples, applicable means for communicating (e.g., receiving, transmitting, etc.) may be embodied by such communications circuitry.

The edge computing node 2050 may include or be coupled to acceleration circuitry 2064, which may be embodied by one or more artificial intelligence (AI) accelerators, a neural compute stick, neuromorphic hardware, an FPGA, an arrangement of GPUs, an arrangement of xPUs/DPUs/IPU/NPUs, one or more SoCs, one or more CPUs, one or more digital signal processors, dedicated ASICs, or other forms of specialized processors or circuitry designed to accomplish one or more specialized tasks. These tasks may include AI processing (including machine learning, training, inferencing, and classification operations), visual data processing, network data processing, object detection, rule analysis, or the like. These tasks also may include the specific edge computing tasks for service management and service operations discussed elsewhere in this document.

The interconnect 2056 may couple the processor 2052 to a sensor hub or external interface 2070 that is used to connect additional devices or subsystems. The devices may include sensors 2072, such as accelerometers, level sensors, flow sensors, optical light sensors, camera sensors, temperature sensors, global navigation system (e.g., GPS) sensors, pressure sensors, barometric pressure sensors, and the like. The hub or interface 2070 further may be used to connect the edge computing node 2050 to actuators 2074, such as power switches, valve actuators, an audible sound generator, a visual warning device, and the like.

In some optional examples, various input/output (I/O) devices may be present within or connected to, the edge computing node 2050. For example, a display or other output device 2084 may be included to show information, such as sensor readings or actuator position. An input device 2086, such as a touch screen or keypad may be included to accept input. An output device 2084 may include any number of forms of audio or visual display, including simple visual outputs such as binary status indicators (e.g., light-emitting diodes (LEDs)) and multi-character visual outputs, or more complex outputs such as display screens (e.g., liquid crystal display (LCD) screens), with the output of characters, graphics, multimedia objects, and the like being generated or produced from the operation of the edge computing node 2050. A display or console hardware, in the context of the present system, may be used to provide output and receive input of an edge computing system; to manage components or services of an edge computing system; identify a state of an edge computing component or service; or to conduct any other number of management or administration functions or service use cases.

A battery 2076 may power the edge computing node 2050, although, in examples in which the edge computing node 2050 is mounted in a fixed location, it may have a power supply coupled to an electrical grid, or the battery may be used as a backup or for temporary capabilities. The battery 2076 may be a lithium ion battery, or a metal-air battery, such as a zinc-air battery, an aluminum-air battery, a lithium-air battery, and the like.

A battery monitor/charger 2078 may be included in the edge computing node 2050 to track the state of charge (SoCh) of the battery 2076, if included. The battery monitor/charger 2078 may be used to monitor other parameters of the battery 2076 to provide failure predictions, such as the state of health (SoH) and the state of function (SoF) of the battery 2076. The battery monitor/charger 2078 may include a battery monitoring integrated circuit, such as an LTC4020 or an LTC2990 from Linear Technologies, an ADT7488A from ON Semiconductor of Phoenix Arizona, or an IC from the UCD90xxx family from Texas Instruments of Dallas, TX. The battery monitor/charger 2078 may communicate the information on the battery 2076 to the processor 2052 over the interconnect 2056. The battery monitor/charger 2078 may also include an analog-to-digital (ADC) converter that enables the processor 2052 to directly monitor the voltage of the battery 2076 or the current flow from the battery 2076. The battery parameters may be used to determine actions that the edge computing node 2050 may perform, such as transmission frequency, mesh network operation, sensing frequency, and the like.

A power block 2080, or other power supply coupled to a grid, may be coupled with the battery monitor/charger 2078 to charge the battery 2076. In some examples, the power block 2080 may be replaced with a wireless power receiver to obtain the power wirelessly, for example, through a loop antenna in the edge computing node 2050. A wireless battery charging circuit, such as an LTC4020 chip from Linear Technologies of Milpitas, California, among others, may be included in the battery monitor/charger 2078. The specific charging circuits may be selected based on the size of the battery 2076, and thus, the current required. The charging may be performed using the Airfuel standard promulgated by the Airfuel Alliance, the Qi wireless charging standard promulgated by the Wireless Power Consortium, or the Rezence charging standard, promulgated by the Alliance for Wireless Power, among others.

The storage 2058 may include instructions 2082 in the form of software, firmware, or hardware commands to implement the techniques described herein. Although such instructions 2082 are shown as code blocks included in the memory 2054 and the storage 2058, it may be understood that any of the code blocks may be replaced with hardwired circuits, for example, built into an application specific integrated circuit (ASIC).

In an example, the instructions 2082 provided via the memory 2054, the storage 2058, or the processor 2052 may be embodied as a non-transitory, machine readable medium 2060 including code to direct the processor 2052 to perform electronic operations in the edge computing node 2050. The processor 2052 may access the non-transitory, machine readable medium 2060 over the interconnect 2056. For instance, the non-transitory, machine readable medium 2060 may be embodied by devices described for the storage 2058 or may include specific storage units such as optical disks, flash drives, or any number of other hardware devices. The non-transitory, machine readable medium 2060 may include instructions to direct the processor 2052 to perform a specific sequence or flow of actions, for example, as described with respect to the flowchart(s) and block diagram(s) of operations and functionality depicted above. As used herein, the terms "machine-readable medium" and "computer-readable medium" are interchangeable.

Also, in a specific example, the instructions 2082 on the processor 2052 (separately, or in combination with the instructions 2082 of the machine-readable medium 2060) may configure execution or operation of a trusted execution environment (TEE) 2090. In an example, the TEE 2090 operates as a protected area accessible to the processor 2052 for secure execution of instructions and secure access to data. Various implementations of the TEE 2090, and an accompanying secure area in the processor 2052 or the memory 2054 may be provided, for instance, through use of Intel^{®} Software Guard Extensions (SGX) or ARM^{®} TrustZone^{®} hardware security extensions, Intel^{®} Management Engine (ME), or Intel^{®} Converged Security Manageability Engine (CSME). Other aspects of security hardening, hardware roots-of-trust, and trusted or protected operations may be implemented in the edge computing device 2050 through the TEE 2090 and the processor 2052.

In further examples, a machine-readable medium also includes any tangible medium that is capable of storing, encoding or carrying instructions for execution by a machine and that cause the machine to perform any one or more of the methodologies of the present disclosure or that is capable of storing, encoding or carrying data structures utilized by or associated with such instructions. A "machine-readable medium" thus may include but is not limited to, solid-state memories, and optical and magnetic media. Specific examples of machine-readable media include non-volatile memory, including but not limited to, by way of example, semiconductor memory devices (e.g., electrically programmable read-only memory (EPROM), electrically erasable programmable read-only memory (EEPROM)) and flash memory devices; magnetic disks such as internal hard disks and removable disks; magnetooptical disks; and CD-ROM and DVD-ROM disks. The instructions embodied by a machine-readable medium may further be transmitted or received over a communications network using a transmission medium via a network interface device utilizing any one of a number of transfer protocols (e.g., Hypertext Transfer Protocol (HTTP)).

A machine-readable medium may be provided by a storage device or other apparatus which is capable of hosting data in a non-transitory format. In an example, information stored or otherwise provided on a machine-readable medium may be representative of instructions, such as instructions themselves or a format from which the instructions may be derived. This format from which the instructions may be derived may include source code, encoded instructions (e.g., in compressed or encrypted form), packaged instructions (e.g., split into multiple packages), or the like. The information representative of the instructions in the machine-readable medium may be processed by processing circuitry into the instructions to implement any of the operations discussed herein. For example, deriving the instructions from the information (e.g., processing by the processing circuitry) may include: compiling (e.g., from source code, object code, etc.), interpreting, loading, organizing (e.g., dynamically or statically linking), encoding, decoding, encrypting, unencrypting, packaging, unpackaging, or otherwise manipulating the information into the instructions.

In an example, the derivation of the instructions may include assembly, compilation, or interpretation of the information (e.g., by the processing circuitry) to create the instructions from some intermediate or preprocessed format provided by the machine-readable medium. The information, when provided in multiple parts, may be combined, unpacked, and modified to create the instructions. For example, the information may be in multiple compressed source code packages (or object code, or binary executable code, etc.) on one or several remote servers. The source code packages may be encrypted when in transit over a network and decrypted, uncompressed, assembled (e.g., linked) if necessary, and compiled or interpreted (e.g., into a library, stand-alone executable, etc.) at a local machine, and executed by the local machine.

FIG. 21 is a block diagram of an example processor platform 2100 structured to execute the instructions of FIGS. 10 and 11 to implement the information object generator 900 of FIG. 9. The example processor platform 2100can be, for example, a server, a personal computer, a workstation, a self-learning machine (e.g., a neural network), or any other type of computing device.

The example processor platform 2100of the illustrated example includes a example processor platform 2100. The E example processor platform 2100of the illustrated example is hardware. For example, the example processor platform 2100can be implemented by one or more integrated circuits, logic circuits, microprocessors, GPUs, DSPs, or controllers from any desired family or manufacturer. The hardware processor may be a semiconductor based (e.g., silicon based) device. In this example, the processor implements the example telemetry information object generator 902, the example attestation verifier 904, the example evidence collector 906, the example root of trust 908, the example temporal data generator 910, and the example interface generator 912.

The example processor platform 2100of the illustrated example includes a local memory 2113 (e.g., a cache). The example processor platform 2100of the illustrated example is in communication with a main memory including a edge computing local memory 2113 and a main memory 2116 via a bus 2118. The edge computing local memory 2113 may be implemented by Synchronous Dynamic Random Access Memory (SDRAM), Dynamic Random Access Memory (DRAM), RAMBUS^{®} Dynamic Random Access Memory (RDRAM^{®}) and/or any other type of random access memory device. The main memory 2116 may be implemented by flash memory and/or any other desired type of memory device. Access to the main edge computing local memory 2113, 2116 is controlled by a memory controller.

The example processor platform 2100 of the illustrated example also includes an interface circuit 2120. The interface circuit 2120 may be implemented by any type of interface standard, such as an Ethernet interface, a universal serial bus (USB), a Bluetooth^{®} interface, a near field communication (NFC) interface, and/or a PCI express interface.

In the illustrated example, one or more input devices 2122 are connected to the interface circuit 2120. The input device(s) 2122 permit(s) a user to enter data and/or commands into the example processor platform 2100. The input device(s) can be implemented by, for example, an audio sensor, a microphone, a camera (still or video), a keyboard, a button, a mouse, a touchscreen, a track-pad, a trackball, isopoint and/or a voice recognition system.

One or more output devices 2124 are also connected to the interface circuit 2120 of the illustrated example. The output devices 2124 can be implemented, for example, by display devices (e.g., a light emitting diode (LED), an organic light emitting diode (OLED), a liquid crystal display (LCD), a cathode ray tube display (CRT), an in-place switching (IPS) display, a touchscreen, etc.), a tactile output device, a printer and/or speaker. The interface circuit 2120 of the illustrated example, thus, typically includes a graphics driver card, a graphics driver chip and/or a graphics driver processor.

The interface circuit 2120 of the illustrated example also includes a communication device such as a transmitter, a receiver, a transceiver, a modem, a residential gateway, a wireless access point, and/or a network interface to facilitate exchange of data with external machines (e.g., computing devices of any kind) via a network 2126. The communication can be via, for example, an Ethernet connection, a digital subscriber line (DSL) connection, a telephone line connection, a coaxial cable system, a satellite system, a line-of-site wireless system, a cellular telephone system, etc.

The example processor platform 2100of the illustrated example also includes one or more such mass storage devices 2128 for storing software and/or data. Examples of mass storage devices 2128 include floppy disk drives, hard drive disks, compact disk drives, Blu-ray disk drives, redundant array of independent disks (RAID) systems, and digital versatile disk (DVD) drives.

Example computer readable instructions 2132 of FIGS. 10 and 11 may be stored in the mass storage device 2128, in the edge computing local memory 2113, in the main memory 2116, and/or on a removable non-transitory computer readable storage medium such as a CD or DVD.

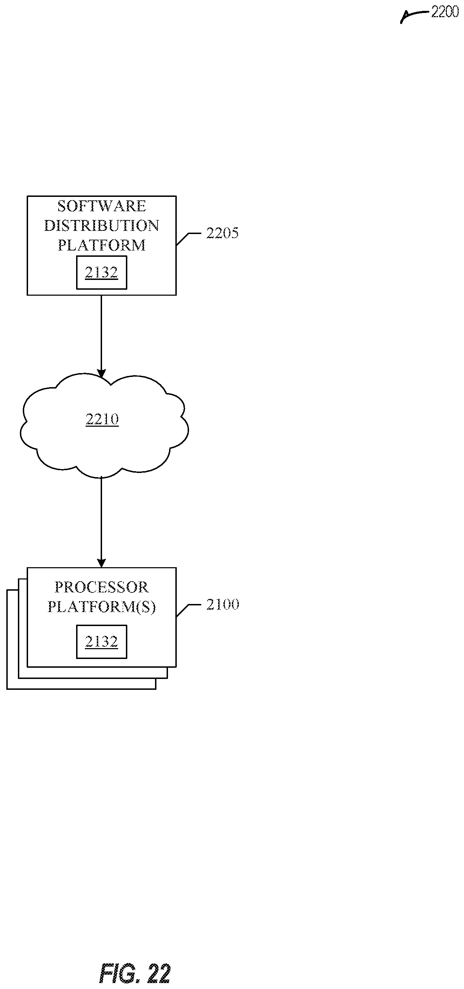

A block diagram illustrating an example software distribution platform 2205 to distribute software such as the example computer readable instructions 2132 of FIG. 21 to third parties is illustrated in FIG. 22. The example software distribution platform 2205 may be implemented by any computer server, data facility, cloud service, etc., capable of storing and transmitting software to other computing devices. The third parties may be customers of the entity owning and/or operating the software distribution platform. For example, the entity that owns and/or operates the software distribution platform may be a developer, a seller, and/or a licensor of software such as the example computer readable instructions 2132 of FIG. 21. The third parties may be consumers, users, retailers, OEMs, etc., who purchase and/or license the software for use and/or re-sale and/or sub-licensing. In the illustrated example, the software distribution platform 2205 includes one or more servers and one or more storage devices. The storage devices store the computer readable instructions 2132, which may correspond to the example computer readable instructions of FIGS. 10-11, as described above. The one or more servers of the example software distribution platform 2205 are in communication with a network 2210, which may correspond to any one or more of the Internet and/or any of the example networks described above. In some examples, the one or more servers are responsive to requests to transmit the software to a requesting party as part of a commercial transaction. Payment for the delivery, sale and/or license of the software may be handled by the one or more servers of the software distribution platform and/or via a third party payment entity. The servers enable purchasers and/or licensors to download the computer readable instructions 2132 from the software distribution platform 2205. For example, the software, which may correspond to the example computer readable instructions of FIGS. 10-11, may be downloaded to the example processor platform 2100, which is to execute the computer readable instructions 2132 to implement the information object generator 900. In some examples, one or more servers of the software distribution platform 2205 periodically offer, transmit, and/or force updates to the software (e.g., the example computer readable instructions 2132 of FIG. 21) to ensure improvements, patches, updates, etc. are distributed and applied to the software at the end user devices.

From the foregoing, it will be appreciated that example methods, apparatus and articles of manufacture have been disclosed that facilitate the inclusion of attestation in various computing platforms such as edge computing platforms, multi-access edge computing platforms, etc. Attestation evidence (e.g. claims of trustworthiness attributes) can be seamlessly integrated into an existing telemetry information object infrastructure with minimal impact, which allows attestation capabilities to leverage exiting deployment and investment in a TIO infrastructure. Attestation events can be described in terms of telemetry events. For example, a change to installed firmware can be coded as a telemetry event. Or the creation of an attestable device identity key can likewise ben encoded. An attestation key may be used to digitally sign attestation events that are then collected and reported using the TIO object. Thus, reducing the effort required to implement trusted computing and attestation in conjunction with telemetry and other data systems. A consumer of TIO events, upon detection of an attestation event, may place further processing of TIO supplied telemetry on hold while the consumer (re-)evaluates a risk management formula that determines acceptable conditions in which to accept and process the other telemetry events.

Methods and apparatus disclosed herein extend the idea of just-in-time composition - an idea at the core of software defined infrastructures, to attestation. It democratizes the role of security evaluation and quality controls over data so that systems of hierarchical, self-orchestrating collections can obtain the right trustworthiness valuation to guide the right risk assessment when interacting with various Edge constructions, constellations, edge lets, service flavors and resource slices. As a result, disclosed methods and apparatus simplify on-going adaptation of available infrastructure to changing demands because of provisions for self-shaping of the needed risk assessments. Methods and apparatus disclosed herein simplify migration paths for new infrastructure as components or ingredients are taken offline or new components are brought online by integrating AIO into objects.

Example methods, apparatus, systems, and articles of manufacture to attest objects in edge computing environments are disclosed herein. Further examples and combinations thereof include the following: Example 1 includes an apparatus to generate an attestation information object in an edge computing environment, the apparatus comprising an evidence collector to collect evidence for an attestation information object to attest the authenticity of a first object, a temporal data generator to generate temporal information associated with data associated with the object, the evidence collector to associate the evidence and the temporal information with the first object, and an interface generator to generate an interface for the attestation information object.

Example 2 includes an apparatus as defined in example 1, further including the telemetry information object generator to generate a telemetry information object containing telemetry information associated with the first object, wherein the data is the telemetry information object.

Example 3 includes an apparatus as defined in any foregoing example, wherein the first object is a subsystem of a computing device.

Example 4 includes an apparatus as defined in any foregoing example, further including a root of trust to store trusted information for the apparatus.

Example 5 includes an apparatus as defined in example 4, wherein the evidence collector is to sign the evidence using a key retrieved from the root of trust.

Example 6 includes an apparatus as defined in any foregoing example, wherein the object is an edge node in a multi-access edge computing platform.

Example 7 includes an apparatus as defined in any foregoing example, wherein the interface is configured to receive a request for the attestation information object from a second object.

Example 8 includes an apparatus as defined in example 7, wherein the second object is a verifier to verify the attestation information to attest the authenticity of the object to a relaying party.

Example 9 includes a non-transitory computer readable medium comprising computer readable instructions that, when executed, cause at least one processor to at least collect evidence for an attestation information object to attest the authenticity of a first object, generate temporal information associated with data associated with the object, the evidence collector to associate the evidence and the temporal information with the first object, and generate an interface for the attestation information object.

Example 10 includes the non-transitory computer readable medium as defined in example 9, wherein the instructions, when executed, cause the at least on processor to generate a telemetry information object containing telemetry information associated with the first object, wherein the data is the telemetry information object.

Example 11 includes the non-transitory computer readable medium as defined in any foregoing example, wherein the first object is a subsystem of a computing device.

Example 12 includes the non-transitory computer readable medium as defined in any foregoing example, wherein the instructions, when executed, cause the at least on processor to store trusted information for the apparatus.

Example 13 includes the non-transitory computer readable medium as defined in example 12, wherein the instructions, when executed, cause the at least on processor to sign the evidence using a key retrieved from the root of trust.

Example 14 includes the non-transitory computer readable medium as defined in any foregoing example, wherein the object is an edge node in a multi-access edge computing platform.

Example 15 includes the non-transitory computer readable medium as defined in any foregoing example, wherein the interface is configured to receive a request for the attestation information object from a second object.

Example 16 includes the non-transitory computer readable medium as defined in example 15, wherein the second object is a verifier to verify the attestation information to attest the authenticity of the object to a relaying party.

Example 17 includes an apparatus to generate an attestation information object in an edge computing environment, the apparatus comprising means for collecting evidence for an attestation information object to attest the authenticity of a first object, means for generating temporal information associated with data associated with the object, the evidence collector to associate the evidence and the temporal information with the first object, and means for generating an interface for the attestation information object.

Example 18 includes an apparatus as defined in example 17, further including means for generating a telemetry information object containing telemetry information associated with the first object, wherein the data is the telemetry information object.

Example 19 includes an apparatus as defined in any foregoing example, wherein the first object is a subsystem of a computing device.

Example 20 includes an apparatus as defined in any foregoing example, further including means for storing trusted information for the apparatus.

Example 21 includes an apparatus as defined in example 20, wherein the means for collecting is to sign the evidence using a key retrieved from the root of trust.

Example 22 includes an apparatus as defined in any foregoing example, wherein the object is an edge node in a multi-access edge computing platform.

Example 23 includes an apparatus as defined in any foregoing example, wherein the interface is configured to receive a request for the attestation information object from a second object.

Example 24 includes an apparatus as defined in example 23, wherein the second object is a verifier to verify the attestation information to attest the authenticity of the object to a relaying party.

Example 25 includes a method to generate an attestation information object in an edge computing environment, the method comprising collecting evidence for an attestation information object to attest the authenticity of a first object, generating temporal information associated with data associated with the object, the evidence collector to associate the evidence and the temporal information with the first object, and generating an interface for the attestation information object.

Example 26 includes a method as defined in example 25, further including generating a telemetry information object containing telemetry information associated with the first object, wherein the data is the telemetry information object.

Example 27 includes a method as defined in any foregoing example, wherein the first object is a subsystem of a computing device.

Example 28 includes a method as defined in any foregoing example, further including storing trusted information for the apparatus.

Example 29 includes a method as defined in example 28, further including signing the evidence using a key retrieved from the root of trust.

Example 30 includes a method as defined in any foregoing example, wherein the object is an edge node in a multi-access edge computing platform.

Example 31 includes a method as defined in any foregoing example, wherein the interface is configured to receive a request for the attestation information object from a second object.

Example 32 includes a method as defined in example 31, wherein the second object is a verifier to verify the attestation information to attest the authenticity of the object to a relaying party.

Example 33 is an edge computing gateway, comprising processing circuitry to perform any of Examples 25-32.

Example 34 is an edge computing node, comprising processing circuitry to perform any of Examples 25-32.

Example 35 is a base station, comprising a network interface card and processing circuitry to perform any of Examples 25-32.

Example 36 is a computer-readable medium comprising instructions to perform any of Examples 25-32.

Although certain example methods, apparatus and articles of manufacture have been disclosed herein, the scope of coverage of this patent is not limited thereto.

## Claims

1. An apparatus (900) configured
to generate an attestation information object (710) in an edge computing environment, the apparatus comprising:
a telemetry information object generator (902) configured to generate a telemetry information object (706) containing telemetry information associated with a first edge node (702) in a multi-access edge computing platform, wherein the telemetry information object generator (902) is further configured to generate a telemetry information object interface (708) for the telemetry information object (706), wherein the telemetry information object interface (708) defines or specifies one or more commands or instructions to invoke the telemetry information object (706) to obtain the telemetry information;
an evidence collector (906) configured to collect evidence to be used as attestation information for the attestation information object (710) to attest the authenticity of the first edge node (702) or of the telemetry information associated with the first edge node (702), wherein the evidence collector (906) is configured to associate the attestation information with the telemetry information object (706);
a temporal data generator (910) configured to generate temporal information associated with the telemetry information object (706), wherein the temporal information indicates an expiration for the telemetry information contained in the telemetry information object (706) or an evaluation of the reliability of the telemetry information that varies over time; and
an interface generator (912) configured to generate an attestation information object interface (712) for the attestation information object (710), wherein the attestation information object interface (712) defines or specifies one or more commands or instructions to obtain the attestation information,
wherein the telemetry information object interface (708) and the attestation information object interface (712) are separate interfaces.

2. An apparatus as defined in claim 1, further including a root of trust (908) configured to store
trusted information for the apparatus (900).

3. An apparatus as defined in claim 2, wherein the evidence collector (906) is configured to sign the
evidence using a key retrieved from the root of trust (908).

4. An apparatus as defined in any of claims 1 to 3, wherein the attestation information object interface (712) is configured to receive a request for the attestation information object (710) from a second object.

5. An apparatus as defined in claim 4, wherein the second object is a verifier configured to verify
the attestation information to attest the authenticity of the first edge node (702) to a relaying party.

6. A non-transitory computer readable medium comprising computer readable instructions that, when executed, cause at least one processor to at least:
generate a telemetry information object (706) containing telemetry information associated with a first edge node (702) in a multi-access edge computing platform, and generate a telemetry information object interface (708) for the telemetry information object (706), wherein the telemetry information object interface (708) defines or specifies one or more commands or instructions to invoke the telemetry information object (706) to obtain the telemetry information;
collect evidence to be used as attestation information for an attestation information object (710) to attest the authenticity of the first edge node (702) or of the telemetry information associated with the first edge node (702), and associate the attestation information with the telemetry information object (706);
generate temporal information associated with the telemetry information object (706), wherein the temporal information indicates an expiration for the telemetry information contained in the telemetry information object (706) or an evaluation of the reliability of the telemetry information that varies over time; and
generate an attestation information object interface (712) for the attestation information object (710), wherein the attestation information object interface (712) defines or specifies one or more commands or instructions to obtain the attestation information,
wherein the telemetry information object interface (708) and the attestation information object interface (712) are separate interfaces.

7. The non-transitory computer readable medium as defined in claim 6, wherein the instructions, when executed, cause the at least one processor to store trusted information for an apparatus (900).

8. The non-transitory computer readable medium as defined in claim 7, wherein the instructions, when executed, cause the at least on processor to sign the evidence using a key retrieved from a root of trust (908).

9. The non-transitory computer readable medium as defined in any of claims 6 to 8, wherein the attestation information object interface (712) is configured to receive a request for the attestation information object (710) from a second object.

10. The non-transitory computer readable medium as defined in claim 9, wherein the second object is a verifier to verify the attestation information (710) to attest the authenticity of the first edge node (702) to a relaying party.

11. A method to generate an attestation information object (710) in an edge computing environment, the method comprising:
generating (1002) a telemetry information object (706) containing telemetry information associated with a first edge node (702) in a multi-access edge computing platform, and generating a telemetry information object interface (708) for the telemetry information object (706), wherein the telemetry information object interface (708) defines or specifies one or more commands or instructions to invoke the telemetry information object (706) to obtain the telemetry information;
collecting (1004) evidence to be used as attestation information for the attestation information object (710) to attest the authenticity of the first edge node (702) or of the telemetry information associated with the first edge node (702), and associate the attestation information with the telemetry information object (706);
generating (1006, 1008) temporal information associated with the telemetry information object (706), wherein the temporal information indicates an expiration for the telemetry information contained in the telemetry information object (706) or an evaluation of the reliability of the telemetry information that varies over time; and
generating (1016) an attestation information object interface (712) for the attestation information object (710), wherein the attestation information object interface (712) defines or specifies one or more commands or instructions to obtain the attestation information,
wherein the telemetry information object interface (708) and the attestation information object interface (712) are separate interfaces.

## Patentansprüche

1. Einrichtung (900), die ausgelegt ist zum Erzeugen eines Attestierungsinformationsobjekts (710) in einer Edge-Rechenumgebung, wobei die Einrichtung umfasst:
einen Telemetrieinformationsobjektgenerator (902), der ausgelegt ist zum Erzeugen eines Telemetrieinformationsobjekt (706), das Telemetrieinformationen enthält, die mit einem ersten Edge-Knoten (702) in einer Mehrfachzugriff-Edge-Rechenplattform assoziiert sind, wobei der Telemetrieinformationsobjektgenerator (902) ferner ausgelegt ist zum Erzeugen einer Telemetrieinformationsobjektschnittstelle (708) für das Telemetrieinformationsobjekt (706), wobei die Telemetrieinformationsobjektschnittstelle (708) einen oder mehrere Befehle oder eine oder mehrere Anweisungen zum Aufrufen des Telemetrieinformationsobjekts (706) definiert oder spezifiziert, um die Telemetrieinformationen zu erhalten;
einen Beweiskollektor (906), der ausgelegt ist zum Sammeln von Beweisen, die als Attestierungsinformationen für das Attestierungsinformationsobjekt (710) verwendet werden sollen, um die Authentizität des ersten Edge-Knotens (702) oder der Telemetrieinformationen, die mit dem ersten Edge-Knoten (702) assoziiert sind, zu attestieren, wobei der Beweiskollektor (906) ausgelegt ist zum Assoziieren der Attestierungsinformationen mit dem Telemetrieinformationsobjekt (706);
einen Generator (910) für zeitliche Daten, der ausgelegt ist zum Erzeugen zeitlicher Informationen, die mit dem Telemetrieinformationsobjekt (706) assoziiert sind, wobei die zeitlichen Informationen einen Ablauf für die Telemetrieinformationen, die im Telemetrieinformationsobjekt (706) enthalten sind, oder
eine Evaluierung der Zuverlässigkeit der Telemetrieinformationen, die im Laufe der Zeit variiert, angeben; und
einen Schnittstellengenerator (912), der ausgelegt ist zum Erzeugen einer Attestierungsinformationsobjektschnittstelle (712) für das Attestierungsinformationsobjekt (710), wobei die Attestierungsinformationsobjektschnittstelle (712) einen oder mehrere Befehle oder eine oder mehrere Anweisungen definiert oder spezifiziert, um die Attestierungsinformationen zu erhalten,
wobei die Telemetrieinformationsobjektschnittstelle (708) und die Attestierungsinformationsobjektschnittstelle (712) separate Schnittstellen sind.

2. Einrichtung nach Anspruch 1, die ferner eine Root-of-Trust (908) aufweist, die ausgelegt ist zum Speichern vertrauenswürdiger Informationen für die Einrichtung (900).

3. Einrichtung nach Anspruch 2, wobei der Beweiskollektor (906) ausgelegt ist zum Signieren der Beweise unter Verwendung eines Schlüssels, der aus der Root-of-Trust (908) abgerufen wird.

4. Einrichtung nach einem der Ansprüche 1 bis 3, wobei die Attestierungsinformationsobjektschnittstelle (712) ausgelegt ist zum Empfangen einer Anforderung für das Attestierungsinformationsobjekt (710) von einem zweiten Objekt.

5. Einrichtung nach Anspruch 4, wobei das zweite Objekt ein Verifizierer ist, der ausgelegt ist zum Verifizieren der Attestierungsinformationen, um die Authentizität des ersten Edge-Knotens (702) an eine weiterleitende Partei zu attestieren.

6. Nichtflüchtiges computerlesbares Medium, umfassend computerlesbare Anweisungen, die, wenn sie ausgeführt werden, mindestens einen Prozessor zumindest zu Folgendem veranlassen:
Erzeugen eines Telemetrieinformationsobjekt (706), das Telemetrieinformationen enthält, die mit einem ersten Edge-Knoten (702) in einer Mehrfachzugriff-Edge-Rechenplattform assoziiert sind, und Erzeugen einer Telemetrieinformationsobjektschnittstelle (708) für das Telemetrieinformationsobjekt (706), wobei die Telemetrieinformationsobjektschnittstelle (708) einen oder mehrere Befehle oder eine oder mehrere Anweisungen zum Aufrufen des Telemetrieinformationsobjekts (706) definiert oder spezifiziert, um die Telemetrieinformationen zu erhalten;
Sammeln von Beweisen, die als Attestierungsinformationen für ein Attestierungsinformationsobjekt (710) verwendet werden sollen, um die Authentizität des ersten Edge-Knotens (702) oder der Telemetrieinformationen, die mit dem ersten Edge-Knoten (702) assoziiert sind, zu attestieren, und Assoziieren der Attestierungsinformationen mit dem Telemetrieinformationsobjekt (706);
Erzeugen zeitlicher Informationen, die mit dem Telemetrieinformationsobjekt (706) assoziiert sind, wobei die zeitlichen Informationen einen Ablauf für die Telemetrieinformationen, die im Telemetrieinformationsobjekt (706) enthalten sind, oder eine Evaluierung der Zuverlässigkeit der Telemetrieinformationen, die im Laufe der Zeit variiert, angeben; und
Erzeugen einer Attestierungsinformationsobjektschnittstelle (712) für das Attestierungsinformationsobjekt (710), wobei die Attestierungsinformationsobjektschnittstelle (712) einen oder mehrere Befehle oder eine oder mehrere Anweisungen definiert oder spezifiziert, um die Attestierungsinformationen zu erhalten,
wobei die Telemetrieinformationsobjektschnittstelle (708) und die Attestierungsinformationsobjektschnittstelle (712) separate Schnittstellen sind.

7. Nichtflüchtiges computerlesbares Medium nach Anspruch 6, wobei die Anweisungen, wenn sie ausgeführt werden, ferner bewirken, dass der mindestens eine Prozessor vertrauenswürdige Informationen für eine Einrichtung (900) speichert.

8. Nichtflüchtiges computerlesbares Medium nach Anspruch 7, wobei die Anweisungen, wenn sie ausgeführt werden, ferner bewirken, dass der mindestens eine Prozessor die Beweise unter Verwendung eines Schlüssels signiert, der aus einer Root-of-Trust (908) abgerufen wird.

9. Nichtflüchtiges computerlesbares Medium nach einem der Ansprüche 6 bis 8, wobei die Attestierungsinformationsobjektschnittstelle (712) ausgelegt ist zum Empfangen einer Anforderung für das Attestierungsinformationsobjekt (710) von einem zweiten Objekt.

10. Nichtflüchtiges computerlesbares Medium nach Anspruch 9, wobei das zweite Objekt ein Verifizierer zum Verifizieren der Attestierungsinformationen (710) ist, um die Authentizität des ersten Edge-Knotens (702) an eine weiterleitende Partei zu attestieren.

11. Verfahren zum Erzeugen eines Attestierungsinformationsobjekts (710) in einer Edge-Rechenumgebung, wobei das Verfahren umfasst:
Erzeugen (1002) eines Telemetrieinformationsobjekt (706), das Telemetrieinformationen enthält, die mit einem ersten Edge-Knoten (702) in einer Mehrfachzugriff-Edge-Rechenplattform assoziiert sind, und Erzeugen einer Telemetrieinformationsobjektschnittstelle (708) für das Telemetrieinformationsobjekt (706), wobei die Telemetrieinformationsobjektschnittstelle (708) einen oder mehrere Befehle oder eine oder mehrere Anweisungen zum Aufrufen des Telemetrieinformationsobjekts (706) definiert oder spezifiziert, um die Telemetrieinformationen zu erhalten;
Sammeln (1004) von Beweisen, die als Attestierungsinformationen für das Attestierungsinformationsobjekt (710) verwendet werden sollen, um die Authentizität des ersten Edge-Knotens (702) oder der Telemetrieinformationen, die mit dem ersten Edge-Knoten (702) assoziiert sind, zu attestieren, und Assoziieren der Attestierungsinformationen mit dem Telemetrieinformationsobjekt (706);
Erzeugen (1006, 1008) zeitlicher Informationen, die mit dem Telemetrieinformationsobjekt (706) assoziiert sind, wobei die zeitlichen Informationen einen Ablauf für die Telemetrieinformationen, die im Telemetrieinformationsobjekt (706) enthalten sind, oder eine Evaluierung der Zuverlässigkeit der Telemetrieinformationen, die im Laufe der Zeit variiert, angeben; und
Erzeugen (1016) einer Attestierungsinformationsobjektschnittstelle (712) für das Attestierungsinformationsobjekt (710), wobei die Attestierungsinformationsobjektschnittstelle (712) einen oder mehrere Befehle oder eine oder mehrere Anweisungen definiert oder spezifiziert, um die Attestierungsinformationen zu erhalten,
wobei die Telemetrieinformationsobjektschnittstelle (708) und die Attestierungsinformationsobjektschnittstelle (712) separate Schnittstellen sind.

## Revendications

1. Appareil (900) configuré pour générer un objet informations d'attestation (710) dans un environnement informatique de périphérie, l'appareil comprenant :
un générateur d'objet informations de télémétrie (902) configuré pour générer un objet informations de télémétrie (706) contenant des informations de télémétrie ayant un premier nœud de périphérie (702) dans une plate-forme informatique de périphérie à accès multiple, le générateur d'objet informations de télémétrie (902) étant en outre configuré pour générer une interface d'objet informations de télémétrie (708) pour l'objet informations de télémétrie (706), l'interface d'objet informations de télémétrie (708) définissant ou spécifiant une ou plusieurs commandes ou instructions pour invoquer l'objet informations de télémétrie (706) pour obtenir les informations de télémétrie ;
un collecteur de preuve (906) configuré pour collecter une preuve à utiliser comme informations d'attestation pour l'objet informations d'attestation (710) afin d'attester l'authenticité du premier nœud de périphérie (702) ou des informations de télémétrie associées au premier nœud de périphérie (702), le collecteur de preuve (906) étant configuré pour associer les informations d'attestation à l'objet informations de télémétrie (706) ;
un générateur de données temporelles (910) configuré pour générer des informations temporelles associées à l'objet informations de télémétrie (706), les informations temporelles indiquant une expiration des informations de télémétrie contenues dans l'objet informations de télémétrie (706) ou une évaluation de la fiabilité des informations de télémétrie qui varient dans le temps ; et
un générateur d'interface (912) configuré pour générer une interface d'objet informations d'attestation (712) pour l'objet informations d'attestation (710), l'interface objet d'informations d'attestation (712) définissant ou spécifiant une ou plusieurs commandes ou instructions pour obtenir les informations d'attestation,
l'interface d'objet informations de télémétrie (708) et l'interface d'objet informations d'attestation (712) étant des interfaces distinctes.

2. Appareil selon la revendication 1, incluant en outre une racine de confiance (908) configurée pour stocker des informations de confiance pour l'appareil (900).

3. Appareil selon la revendication 2, dans lequel le collecteur de preuve (906) est configuré pour signer la preuve au moyen d'une clé récupérée à partir de la racine de confiance (908).

4. Appareil selon l'une quelconque des revendications 1 à 3, dans lequel l'interface d'objet informations d'attestation (712) est configurée pour recevoir une demande d'objet informations d'attestation (710) de la part d'un second objet.

5. Appareil selon la revendication 4, dans lequel le deuxième objet est un vérificateur configuré pour vérifier les informations d'attestation afin d'attester l'authenticité du premier nœud de périphérie (702) à une partie de relais.

6. Support non transitoire lisible par ordinateur comprenant des instructions lisibles par ordinateur qui, lorsqu'elles sont exécutées, amènent au moins un processeur à au moins :
générer un objet informations de télémétrie (706) contenant des informations de télémétrie ayant un premier nœud de périphérie (702) dans une plate-forme informatique de périphérie à accès multiple, et générer un objet informations de télémétrie (708) pour l'objet informations de télémétrie (706), l'interface d'objet informations de télémétrie (708) définissant ou spécifiant une ou plusieurs commandes ou instructions pour invoquer l'objet informations de télémétrie (706) pour obtenir les informations de télémétrie ;
collecter une preuve à utiliser comme informations d'attestation pour l'objet informations d'attestation (710) afin d'attester l'authenticité du premier nœud de périphérie (702) ou des informations de télémétrie associées au premier nœud de périphérie (702), et associer les informations d'attestation à l'objet informations de télémétrie (706) ;
générer des informations temporelles associées à l'objet informations de télémétrie (706), les informations temporelles indiquant une expiration des informations de télémétrie contenues dans l'objet informations de télémétrie (706) ou une évaluation de la fiabilité des informations de télémétrie qui varient dans le temps ; et
générer une interface d'objet informations d'attestation (712) pour l'objet informations d'attestation (710), l'interface objet informations d'attestation (712) définissant ou spécifiant une ou plusieurs commandes ou instructions pour obtenir les informations d'attestation,
l'interface d'objet informations de télémétrie (708) et l'interface d'objet informations d'attestation (712) étant des interfaces distinctes.

7. Support non transitoire lisible par ordinateur selon la revendication 6, dans lequel les instructions, lorsqu'elles sont exécutées, amènent l'au moins un processeur à stocker des informations de confiance pour un appareil (900).

8. Support non transitoire lisible par ordinateur selon la revendication 7, dans lequel les instructions, lorsqu'elles sont exécutées, amènent l'au moins un processeur à signer la preuve au moyen d'une clé récupérée à partir d'une racine de confiance (908).

9. Support non transitoire lisible par ordinateur selon l'une quelconque des revendications 6 à 8, dans lequel l'interface d'objet informations d'attestation (712) est configurée pour recevoir une demande d'objet informations d'attestation (710) de la part d'un second objet.

10. Support non transitoire lisible par ordinateur selon la revendication 9, dans lequel le deuxième objet est un vérificateur pour vérifier les informations d'attestation (710) afin d'attester l'authenticité du premier nœud de périphérie (702) à une partie de relais.

11. Procédé pour générer un objet informations d'attestation (710) dans un environnement informatique de périphérie, l'appareil comprenant :
la génération (1002) d'un objet informations de télémétrie (706) contenant des informations de télémétrie ayant un premier nœud de périphérie (702) dans une plate-forme informatique de périphérie à accès multiple, et la génération d'un objet informations de télémétrie (708) pour l'objet informations de télémétrie (706), l'interface d'objet informations de télémétrie (708) définissant ou spécifiant une ou plusieurs commandes ou instructions pour invoquer l'objet informations de télémétrie (706) pour obtenir les informations de télémétrie ;
la collecte (1004) d'une preuve à utiliser comme informations d'attestation pour l'objet informations d'attestation (710) afin d'attester l'authenticité du premier nœud de périphérie (702) ou des informations de télémétrie associées au premier nœud de périphérie (702), et associer les informations d'attestation à l'objet informations de télémétrie (706) ;
la génération (1006, 1008) des informations temporelles associées à l'objet informations de télémétrie (706), les informations temporelles indiquant une expiration des informations de télémétrie contenues dans l'objet informations de télémétrie (706) ou une évaluation de la fiabilité des informations de télémétrie qui varient dans le temps ; et
la génération (1016) d'une interface d'objet informations d'attestation (712) pour l'objet informations d'attestation (710), l'interface objet d'informations d'attestation (712) définissant ou spécifiant une ou plusieurs commandes ou instructions pour obtenir les informations d'attestation,
l'interface d'objet informations de télémétrie (708) et l'interface d'objet informations d'attestation (712) étant des interfaces distinctes.
